(19) **Europäisches Patentamt / European Patent Office / Office européen des brevets**

(11) **EP 1 515 511 B1**

(12) **EUROPEAN PATENT SPECIFICATION**

(45) Date of publication and mention
of the grant of the patent:
**12.10.2011 Bulletin 2011/41**

(51) Int Cl.:
*H04L 29/06* (2006.01)     *G06F 9/46* (2006.01)
*H04L 12/46* (2006.01)

(21) Application number: **04018976.3**

(22) Date of filing: **10.08.2004**

(54) **Multiple offload of network state objects with support for failover events**

Mehrfachabladung von Netzstatusobjekten mit Unterstützung von Failoverereignissen

Multiple déchargement d'objets d'état d'un réseau avec support d'événements de défaillance

(84) Designated Contracting States:
**AT BE BG CH CY CZ DE DK EE ES FI FR GB GR
HU IE IT LI LU MC NL PL PT RO SE SI SK TR**

(30) Priority: **10.09.2003 US 502156 P
19.09.2003 US 666086**

(43) Date of publication of application:
**16.03.2005 Bulletin 2005/11**

(73) Proprietor: **MICROSOFT CORPORATION
Redmond, WA 98052 (US)**

(72) Inventors:
• **Pinkerton, James T.
Sammamish
Washington 98074 (US)**

• **Kaniyar, Sanjay N.
Redmond
Washington 98052 (US)**

(74) Representative: **Grünecker, Kinkeldey,
Stockmair & Schwanhäusser
Anwaltssozietät
Leopoldstrasse 4
80802 München (DE)**

(56) References cited:
**EP-A- 1 359 724       US-A1- 2002 062 333
US-A1- 2003 105 977    US-A1- 2003 158 906
US-A1- 2003 167 346    US-B1- 6 427 171**

• **YANG WANG ET AL: "A dynamic assignment
problem in a mobile system with limited
bandwidth" HICSS'03, 6 January 2003
(2003-01-06), pages 293-302, XP010626730**

**Description**

1. The Field of the Invention

The present invention relates generally to computer networking technology. More particularly, the present invention relates -generally to mechanisms for optimizing the offload of network computing tasks.

2. Background and Relevant Art

The complexity and sophistication of operating systems, application software, networking technology, and the like continue to increase at dramatic rates, resulting in increased computer functionality. This increased functionality often results in increased Central Processor Unit (CPU) load (hereinafter also referred to as "CPU overhead") due to the additional duties that must be performed by the CPU to implement the increased functionality.

One area where the increase in CPU overhead is readily apparent is in the area of networked applications where network speeds are increasing due to the growth in high bandwidth media. Network speeds may even rival the CPU processor speed and access speeds for local memory at host computers. These networked applications further burden the host processor due to the layered architecture used by most operating systems, such as the seven-layer Open System Interconnect (OSI) model or the layered model used by the Windows operating system.

As is well known, such a model is used to describe the flow of data between the physical connection to the network and the end-user application. The most basic functions, such as putting data bits onto the network cable, are performed at the bottom layers, while functions attending to the details of applications are at the top layers. Essentially, the purpose of each layer is to provide services to the next higher layer, shielding the higher layer from the details of how services are actually implemented. The layers are abstracted in such a way that each layer believes it is communicating with the same layer on the other computer.

Various functions that are performed on a data packet as it proceeds between layers can be software intensive, and thus often require a substantial amount of CPU processor and memory resources. For instance, certain functions that are performed on the packet at various layers are extremely CPU intensive, such as packet checksum calculation and verification, encryption and decryption of data (e.g., SSL encryption and IP Security encryption), message digest calculation, TCP segmentation, TCP retransmission and acknowledgment (ACK) processing, packet filtering to guard against denial of service attacks, and User Datagram Protocol (UDP) packet fragmentation. As each of these functions is performed, the resulting demands on the CPU can greatly affect the throughput and performance of the overall computer system.

As the demand on CPU resources grows, the capability and throughput of computer hardware peripherals such as network interface cards (NICs) and the like are also increasing. These peripherals are often equipped with a dedicated processor and memory that are capable of performing many of the tasks and functions that are otherwise performed by the CPU.

The computer industry recognized this capability and developed methods to offload CPU intensive tasks and functions that were previously performed by the CPU. For example, commonly assigned U.S. Patent No. 6,141,705 to Anand et al., U.S. Patent No. 6,370,599 to Anand et al., and U.S. Patent Application No. 09/726,082, "Method and Computer Program Product for Offloading Processing Tasks from Software to Hardware," filed November 29, 2000 provide solutions to query peripheral devices and offload specific processor tasks to the peripheral devices that are capable of performing the intensive tasks and functions. The specific tasks typically offloaded include tasks such as TCP (Transmission Control Protocol) and or IP (Internet Protocol) checksum computation, TCP segmentation such as Large Send Offload (LSO), and secure Internet protocol (IPSEC) encryption and decryption.

These offload mechanisms are limited in that the mechanisms have a secondary requirement that a minimum number of changes be made to the network stack. As a result of this secondary requirement, another limitation is that the offloads have a long code path because the entire network stack is traversed with the offloaded tasks and functions disabled to reach the peripheral device. A further limitation is the lack of integration with the network stack. There is no well defined interface for the network stack to query or set parameters on the peripheral device or an interface for the peripheral device to inform the network stack of any notifications or changes of capabilities. For example, if the route changes when an LSO request is being processed, the fallback mechanism is for the stack to wait for timeouts and retransmit the LSO request.

Another approach that peripheral device manufacturers tried to take was to offload the entire TCP connection from the core stack to a Network Interface Card (NIC). This approach bypasses the entire protocol stack by using a proprietary interface and requires the peripheral device to handle TCP messages, IP (Internet Protocol) messages, ICMP (Internet Control Message Protocol) messages, DNS (Domain Name Server) messages, Dynamic Host Configuration Protocol (DHCP) messages, Routing Information Protocol (RIP) messages, etc.. Additionally, this approach does not address multi-homed environments and does not cleanly integrate with the host operating system network management utilities. If a peripheral device state changes, the offloaded connection can easily fail. Such a potential for offload connection failure is only one of other disadvantages in the present art.

Note that a single "connection" typically consists of state for each of the network layers, referred to here as "state objects". Offloading of network protocol computation, however, is not limited to connection oriented protocols. Other protocols, such as IPSEC, may not be connection oriented but still contain state objects, or groups of state objects, which can be offloaded. Remote DMA (RDMA) may add additional state objects to those required for connection offload. This invention applies to all of the above, thus "state object" refers to one or more network layers which contain state, which may or may not be connection oriented, and may or may not contain more state than just that required for TCP/IP networking.

By way of explanation, and not of limitation, a "network connection" (sometimes herein referred to as a "connection") will be understood to be a "connection" using a protocol such as a TCP connection, a Stream Control Transmission Protocol (SCTP) connection (or stream), and, when it is used to implement connection-oriented communication, connection oriented User Datagram Protocol (UDP). Further, a "network connection" (or "connection"), while typically implemented at the transport layer (i.e. Layer 4) of the seven layer OSI network protocol stack model, could also occur at other layers, including Application Layer protocols that implement connections, or Data Link Layer protocols that implement connections.

Continuing, those developing offload mechanisms have focused on iteratively transferring only one connection at a time or one logical grouping of state objects at a time, particularly in the case of connections that need a relatively high number of CPU cycles for processing. For example, the total number of CPU cycles needed to process a single offloaded connection or state object can be expressed as:

$$A + [B\text{-}C],$$

where

"A" = the number of CPU cycles needed to offload a connection or link ;
"B" = the number of CPU cycles needed to process the connection or link; and
"C" = the number of CPU cycles saved by offloading the connection or link.

If the first term (i.e., "A") is substantially greater than the second terms (i.e., "B-C"), then it is not generally cost effective in terms of CPU overhead to offload a given connection or link. By contrast, if the second term ("B-C") is substantially greater than the first term (i.e., "A"), then a benefit can be realized by offloading the connection or state object. Accordingly, offload mechanisms have been geared primarily toward offloading a connection or state object where the "B-C" term is relatively high. This is frequently the case for "long-lived" connections or connections used to transfer large files.

Long-lived connections, and connections or state objects for transmitting large amounts of data, however, are not the only types of connections or state objects that may require expenditure of a host computer's valuable CPU resources. For-example, in the case of a host on a Wide Area Network (WAN) such as the Internet, a server hosting web pages may be equally consumed with processing hundreds of thousands of "short-lived" connections, such as thousands of simple web page requests.

Generally speaking, "short-lived" connections are, as implied by name, connections whose lifetime is short, such as HyperText Transfer Protocol (HTTP) connections where there may be one or more short data transfer requests and responses between a remote computer and a server (or host), often over a wide area network. HTTP version 1.0 illustrates this case. To request an ordinary text web page using HTTP 1.0, a client initiates a two-way connection with the server (or host) hosting the web page. The client's request of the server will be typically one message, a short ASCII string sequence such as "get file, file name" (e.g., "GET http://10.1.1.1/file_name.html"), the request comprising sometimes no more than a total data size of 100 bytes. After accepting the client's request, the client will close the first direction (client to server) of the two-way connection, and the server will respond by sending the text web page over the second direction (server to client) of the two-way connection, and then close the second direction of the two-way connection. There are many different protocols with this type of workload, including some that combine a small number of requests before closing the connection, rather than processing a single request. Each such protocol is referred to as a short-lived connection.

The HTTP web page request often comprises anywhere from 100 to 1,000 bytes. The HTTP response may also likewise be quite small if, for example, the requested web page is text-based and contains little, if any, multimedia information. Accordingly, neither the request nor the response carries a significant amount of data, especially when one considers the widespread availability of high-speed networks. Moreover, neither the request nor the response requires a significant amount of CPU time under present standards due to increasingly fast processors. Therefore, the connection

3

time needed to process the HTTP request and response may be quite short-lived. In this case, the number of CPU cycles required to offload a single short-lived connection could easily be greater than the number of CPU cycles preserved by not having the CPU process the short-lived connection. Consequently, it is relatively expensive in terms of CPU cycles to iteratively offload one-short-lived connection at a time.

Another constraint related to offloading network computation involves working with specifications that provide for creation of one or more virtual peripheral device(s) on top of one or more physical peripheral device(s). This is useful for several reasons, including aggregation of multiple network links to support load balancing of network traffic and failover of network traffic, as well as subdividing a single link into one or more virtual links, commonly referred to as a Virtual LAN (VLAN), which enables network management to view a physical network as multiple, logically distinct, networks.

Examples of technologies which provide link aggregation include IEEE 802.3ad (also referred to herein as 'the 802.3ad standard"), as well as other vendor proprietary standards. In particular, the 802.3ad standard (as well as vendor proprietary standards) defines how two or more Ethernet links can be combined to support load balancing of network traffic or failover of network traffic across multiple Ethernet links. This capability can be used to a) increase the fault tolerance of the host to network link failures and/or b) to increase the networking capacity of the server by enabling networking traffic to be load balanced across multiple Ethernet links. To accomplish this end, the 802.3ad standard provides for a "team" of peripheral devices that can be ''teamed'' into one virtual peripheral device. The virtual peripheral device then manages the physical peripheral devices in the team by changing which of the peripheral devices in the team are currently enabled (for failover) and/or by directing network traffic across the multiple physical devices (for load balancing). For example, if the ''team'' is configured for failover and the virtual peripheral device detects that a physical peripheral device has failed, then the virtual peripheral device will no longer use the failed peripheral device and instead use another peripheral device in the team of peripheral devices to send and receive networking traffic.

Examples of Virtual LAN specifications include the IEEE 803.1q specification for VLAN tags. The specification defines a tag that is added to the Media Access Control (MAC) address, enabling the Ethernet network to be logically subdivided into separate networks by changing the tag value. This enables system administrators to logically separate traffic for different administrative domains (e.g. separate a network for engineering development from a network for payroll) while using the same physical network for both. It also allows for isolation for security concerns, such as logically isolating block storage network traffic from traditional peer-to-peer traffic.

There are several limitations when using current state of the art in network offload and attempting to combine them with the ability to create virtual peripheral devices. If the virtual peripheral device is used for load balancing or fault tolerance, and a connection or state object is offloaded through the virtual peripheral device to a physical peripheral device, and the physical peripheral device fails, typically the offloaded connection or state object can not be recovered (let alone failed over to another physical peripheral device). Additionally, current state of the art often requires the virtual peripheral device to be able to team heterogeneous physical devices. If physical peripheral devices support offloading of connections or state objects, then this means that the physical devices in the team have different offload capabilities. If a physical device fails and a new physical device within the team is selected by the virtual device, the new physical device may have a greater or lesser capacity for offload or different capabilities for offload than the prior device. Current state of the art for offloading of network computation does not enable this level of versatility.

Accordingly, there is a need in the art to reduce the overhead associated with offloading of multiple connections from a processor to a peripheral device, and vice versa, as well as a need to extend offload capabilities to cleanly integrate with existing specifications that enable the creation of one or more virtual peripheral device(s) on top of one or more physical peripheral device(s) to increase fault tolerance, network capacity, and network management in an offloaded environment. In particular, there is a need for solutions for offloading multiple short-lived connections while simultaneously maintaining specialized processing requirements for the individual connections. As well, there is a need for solutions for offloading or uploading aggregated connections within the 802.3ad environment (particularly as applied to peripheral device failover events) and a need to enable support for Virtual LANs.

US 2003/0158906 A1 relates to selective offloading of protocol processing from a host computer to an offloading auxiliary processor. When making an offload request, the host computer includes information regarding the protocol to be offloaded. Further, protocol state information is passed between the host resident task interface function and several host resident offload processing functions. The protocol state information is also passed between an auxiliary processor (AP) resident task interface function and several AP resident offload processing functions. The AP resident task interface function is responsible for maintaining the protocol state information in the auxiliary processor. Moreover, the protocol service state information includes the task request from the network application, state information describing the connection that was previously established and initialized, and information to support the communications and synchronization between the host resident and the AP resident offload task interface functions.

Wang, Y. & Kunz, T. "A dynamic assignment problem in a mobile communication system with limited bandwidth", 2003-01-06, pages 293 to 302, relates to floating some computational objects between a resource-constrained portable device and its powerful proxy server to adapt to the mobile environment. In order to reduce the cost of interprocessor communication, a set of highly related objects should be migrated to a single processor during the execution of those objects. A mobile application, an object-oriented program, has been abstracted into a weighted object graph, where the node set N is a set of objects, which are marked with their information such as the size and the computational load. The weighted edge set E indicates the cost of inter-object references when the objects are assigned to the mobile host. The described algorithm takes as its input an object graph, an object to be migrated, and the link capacity. It outputs the migratable set, containing all the objects that should accompany the object to move to the remote side.

EP-A-1 359 724, published on November 5, 2003, relates to a system, where a switch is used to offload the processing unit from performing network stack operations for intermediate software layers. In a hierarchy, the intermediate software layers do not have to exclusively reside in the host or in the peripheral device, and the hierarchy allows any of the intermediate layers to either be completely offloaded or to remain in the host, or a combination of both, e.g., offload one or more specific connections. Further, an inverted tree structure is used, where two route cache entries that go through an ARP table entry are shown. Two TCP connections utilize the first route cache entry, while two other TCP connections reference the second route cache entry. If any ARP update occurs, only the one ARP table entry must be updated.

BRIEF SUMMARY OF THE INVENTION

It is the object of the invention to reduce the overhead associated with offloading of a connection from a processor to a peripheral device.

This object is solved by the present invention as claimed in the independent claims.

Preferred embodiments are defined by the dependent claims.

The present invention overcomes one or more of the foregoing problems with the prior state of the art by providing a method of reliably offloading and uploading multiple network connections or state objects between a host processor and a peripheral device processor. The present invention also provides for 802.3ad (or equivalent) failover events, allowing the offloaded connections or state objects to be transferred to another peripheral device while preserving object state between various connections, and compensating for differing resource capabilities among other peripheral devices. The inventive method is cost-effective in terms of CPU cycles for transferring either long-lived or short-lived connections (or both).

In one embodiment, the present invention reduces the term "A" in the above-described equation ("A + [B-C]") by enabling the offload of multiple connections at the same time, thus making the offload of short-lived connections viable, where previously only long-lived connections were typically viewed as viable for offloading to the peripheral device.

In a network stack, two or more TCP connections may traverse the same path through one or more intermediate software layers. Each of the software layers has a state object, which may include one or more of a constant state variable, a cached state variable, and a delegated state variable. For any software layer, the host offloads processing control to a peripheral device for a layer's delegated stated variables to enable the peripheral device to independently transfer data. For cached state variables, the host retains control of the cached state variables, and updates the peripheral device if the cached state variable changes. For constant state variables, their value does not change for the lifetime of the offload. Thus, though the host may offload the state object to a peripheral device, the state of the system remains consistent, even if events cause cached or delegated state variables to be changed.

The path data transfer takes between two hosts is represented by the path state object. If two connections transfer data through the same path, then they will share the same path state object. Thus there is a resulting hierarchy of state objects that takes the form of an inverted tree data structure. The host may offload the entire inverted tree data structure to the peripheral device, allowing the host to offload processing control to the peripheral device of multiple connections at once. This ability to cleanly offload multiple, specific network functions allows the host to preserve CPU cycles without compromising desired network functions, integrity, fault tolerance, and security, and further allows the present invention to be practiced in a wide variety of environments, including short and long lived connections.

The invention also includes integration of the offload functionality with a grouping of peripheral devices, referred to as a "team" or abstractly as a "virtual peripheral device", to enable better fault tolerance of peripheral or path faults, as well as enable load balancing of networking traffic across multiple peripheral devices. The invention includes a mechanism to allow the virtual peripheral device to stall offload requests while a failover event is occurring, and optionally upload all offloaded state objects, renegotiate the offload capabilities of the virtual peripheral device, and then re-enable offloading of state objects.

Additional features and advantages of the invention will be set forth in the description which follows, and in part will be obvious from the description, or may be learned by the practice of the invention. The features and advantages of the invention may be realized and obtained by means of the instruments and combinations particularly pointed out in the appended claims. These and other features in accordance with the present invention will become more fully apparent from the following description and appended claims, or may be learned by the practice of the invention as set forth hereinafter.

BRIEF DESCRIPTION OF THE DRAWINGS

In order to describe the manner in which the above-recited and other advantages and features of the invention can be obtained, a more particular description of the invention briefly described above will be rendered by reference to specific embodiments thereof which are illustrated in the appended drawings. Understanding that these drawings depict only typical embodiments of the invention and are not therefore to be considered to be limiting of its scope, the invention will be described and explained with additional specificity and detail through the use of the accompanying drawings in which:

Figure 1 is a block diagram illustrating the functional layers of the network stack and the alternate path in accordance with the present invention;
Figure 2 is a block diagram illustrating the functional layers of the NDIS path and the bypass path in accordance with the present invention;
Figure 3 is a ladder diagram illustrating the offload mechanism in accordance with the present invention;
Figures 4A-4D are object diagrams illustrating an inverted tree in accordance with the present invention with respect to intermediate software layer state objects;
Figures 5A-5B are block diagrams illustrating an inverted tree in accordance with the present invention with respect to a collection of block pointers;
Figure 6 shows a possible signal sequence between intermediate software layers in a network protocol stack for updating a cached state portion of a state object in accordance with the present invention;
Figure 7 is a possible signal sequence in accordance with the present invention between intermediate software layers in a network protocol stack wherein the peripheral device requests termination of an offloaded TCP connection;
Figure 8 is a flow chart for transferring processor control of multiple network connections from a source component to a destination component;
Figure 9 is a flow chart for transferring control of multiple network connections from a failed peripheral device back to the host stack, and over to an alternate one or more destination peripheral devices;
Figure 10 is a flow chart for inserting an intermediate driver data structure within an offload data structure; and
Figure 11 is a suitable computing system that may implement features in accordance with the present invention.

DETAILED DESCRIPTION OF THE PREFERRED EMBODIMENTS

The present invention relates generally to computer networking technology. More particularly, the present invention relates generally to mechanisms for optimizing the offload of network computing tasks that are typically performed by a host processor to a specific hardware component, and for returning-control to the host processor as appropriate. The present invention also increases the flexibility of the offloaded network computing tasks, through use of a virtual peripheral device. This flexibility can result in increasing fault tolerance of the offloaded network computing tasks as host load changes or network device state changes, as well as enabling support for virtual LANs.

Accordingly, the present invention contemplates transferring network connections from one peripheral device to another peripheral device, or from a peripheral device to a host processor while compensating for state changes among the various network connections, and compensating for differing resource capabilities among other peripheral devices. By way of explanation, and not of limitation, one will appreciate after reading the specification and claims that a "peripheral device" can include such components as a Network Interface Card, as well as a general purpose CPU with a network adapter, a network processing engine with a dedicated CPU, a traditional miniport with an offload NIC, or a hardware state machine implementation, etc. The following discussion, therefore, describes an inventive method that is cost-effective in terms of CPU cycles for transferring either long-lived or short-lived connections (or both) between components.

As will be discussed in greater detail, a host detects what resources a peripheral device may have, and adjusts the relevant data structures accordingly so that there is consistency between the relevant connections' requirements and the offload peripheral device. The ability to manipulate offload data structures has particular application to allow consistent upload and offload using a wide variety of network protocols, including inserting additional data structures within an offload or upload data structure as appropriate. Since the host maintains control over certain data structures even though the connection may be offloaded, and since the host may renegotiate parameters with a new peripheral device in the event of failover of an initial peripheral device, the present invention provides a novel, robust method of offloading and uploading multiple TCP connections at once, regardless of peripheral device failure, and whether the connection is a long or short-lived connection.

Additional features and advantages of the invention will be set forth in the description which follows, and in part will be obvious from the description, or may be learned by the practice of the invention. The features and advantages of the invention may be realized and obtained by means of the instruments and combinations particularly pointed out in the appended claims. These and other features in accordance with the present invention will become more fully apparent from the following description and appended claims, or may be learned by the practice of the invention as set forth hereinafter.

Embodiments within the scope in accordance with the present invention also include computer-readable media for carrying or having computer-executable instructions or data structures stored thereon. Such computer-readable media can be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or any other medium which can be used to carry or store desired program code means in the form of computer-executable instructions or data structures and which can be accessed by a general purpose or special purpose computer.

When information is transferred or provided over a network or another communications connection (either hardwired, wireless, or a combination of hardwired or wireless) to a computer, the computer properly views the connection as a computer-readable medium. Thus, any such connection is properly termed a computer-readable medium. Combinations of the above should also be included within the scope of computer-readable media. Computer-executable instructions comprise, for example, instructions and data which cause a general purpose computer, special purpose computer, or special purpose processing device to perform a certain function or group of functions.

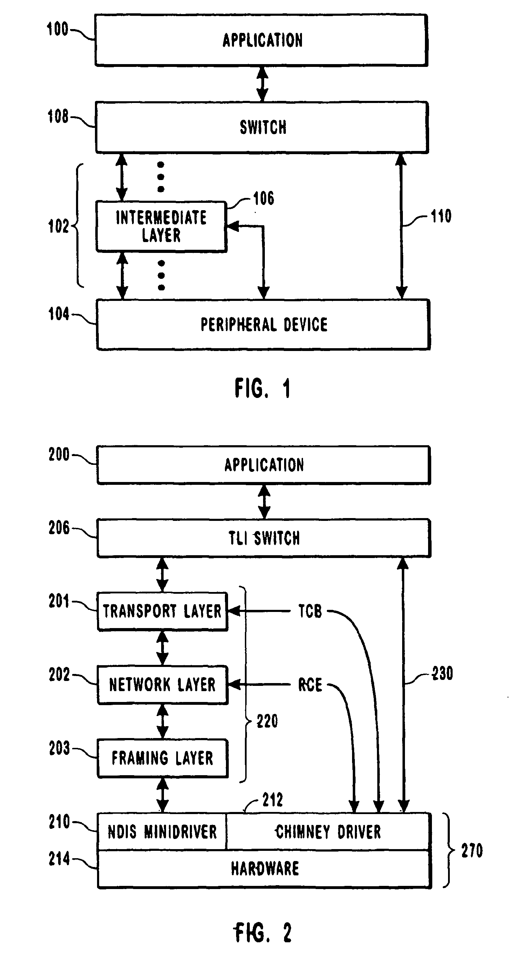

Turning now to Figure 1, the figure illustrates the interrelationship of some of the components that make up a networking model in accordance with the present invention. During normal operation, networked messages are sent by the application 100 through network stack 102 to the peripheral device 104 where the messages are sent to other devices and applications on the network. Additionally, networked message may be received from the other devices and applications on the network using the peripheral device 104, which then passes the networked messages through the network stack 102 to the application 100. The network stack 102 includes one or more intermediate software layers 106. Data sent from application 100 travels through the intermediate software layer(s) 106 where specific operations may be performed on the data such as packaging the data, reliable data transmission, data encryption and calculation of a message digest.

The switch 108 is used to offload network stack operations for the intermediate software layer(s) 106 from a host's processing unit. While the switch 108 is shown separately, it should be noted that the switch 108 may be integrated into the top intermediate layer of the network stack 102. After offloading the network stack operations, data is sent to the peripheral device 104 via chimney 110 to enable peripheral device 104 to perform network stack operations. In this hierarchy, the intermediate software layers do not have to exclusively reside in the host or the peripheral device. Furthermore, the hierarchy allows any of the intermediate layers to either be completely offloaded, to remain in the host, or a combination of both (e.g., offload one or more specific connections). Additionally, chimneys may be layered on top of chimneys (e.g., an IPSEC chimney may be layered on top of a TCP chimney).

A connection may be any combination of reliable and unreliable data transfers, and may include unicast or multicast data transfer. In any case, when the state object(s) for a given connection are offloaded, and there are cached variables in the state object, the intermediate layer guarantees that if the variable designated as "cached" for a respective state object is changed within the host, the cached copy of the variable is updated in the peripheral device. For example, offloading a connection may include offloading a transport control block (TCB) state entry for the Transport Layer with a Route Cache Entry (RCE) for the Network Layer, with an Address Resolution Protocol Entry (ARP) for the Framing Layer, all offloaded to the peripheral device 104. The switch 108 continues to send traffic for a different TCB through the host network stack 102 that shares the same RCE while the switch 108 sends traffic through the chimney 110 for the offloaded TCB.

The switch 108 initiates the offload by sending the intermediate layer 106 an offload request. Each intermediate layer 106 either refuses the offload request or adds resource information to the offload request and sends the offload request to the adjacent software layer in the network stack 102. The offload request includes resource information (potentially for each network layer) that helps the peripheral device 104 decide whether it can successfully offload the connection. When the peripheral device 104 receives the offload request, it calculates whether it has resources available to offload the connection. The peripheral device 104 refuses the offload request if the offload is not possible. Otherwise, the peripheral device 104 accepts the offload request and allocates resources for the connection. The peripheral device 104 completes the offload request by sending a completion message having a list of parameters to the intermediate software layer(s) 106. The list of parameters provides information to the intermediate software layer(s) 106 and switch 108 to allow the intermediate software layer(s) 106 and switch 108 to communicate with the peripheral device. As each intermediate software layer 106 receives the completion message, it removes information for its layer from the list of parameters and passes the remainder of the completion message to the next intermediate layer 106, or if there are no additional intermediate layers 106, to the switch 108.

Either when an intermediate layer 106 receives the completion message for offloading or during the original offload request, the intermediate layer 106 passes its state to the peripheral device 104. Each state may have three types of variables (also referred to as "state variables"): CONST, CACHED, and DELEGATED. A state object corresponding to any given intermediate layer 106 may have all three types of states, or a subset of the three types of states. CONST state variables are constants that never change during the life of the offloaded connection.

The CONST state variables are provided to the peripheral device 104 when offloading processing control of the network stack (hereinafter also referred to simply as "during offload"), but are not returned by the peripheral device 104 back to the appropriate intermediate layer 106 when the state object is uploaded to the host protocol stack (hereinafter also referred to as simply "during upload"). This is because the intermediate layer 106 retains the values for the CONST state variables, thus allowing the data structure passed during upload to be much smaller.

The host processor maintains ownership of CACHED state variables and ensures that any changes to a CACHED state variable(s) in the host processor are updated in the peripheral device 104. Control messages that change the CACHED state variables are handled by the network stack 102. As a result, the host will write CACHED state variables to the peripheral device during offload, but during upload it does not need to read CACHED state variables back from the peripheral device during upload. This further reduces the overhead associated with an upload.

The host processor transfers ownership of DELEGATED state variables to the peripheral device 104. The DELEGATED state variables are written once during offload and are read back during upload. By only transferring back control of the DELEGATED state variables, the overhead associated with uploading the connection back to the host is minimized.

Accordingly, during offload, control of state objects is shared between the host processor and the peripheral device 104 in that control of some of the state variables of a given state object is retained within the host processor, while control of other state variables of the given state object are passed to the peripheral device 104. Therefore, control for processing of state associated with each intermediate layer is cleanly divided between the host processor and the peripheral device such that each owns an exclusive portion of the state.

The host processor can query the peripheral device 104 for DELEGATED state variables when needed. The host processor may also query CONST or CACHED state variables for diagnostics. Dividing the state into three categories (or "variables") enables the network stack 102 to coexist cleanly with the chimney 110. Any state variables that are to be given to the peripheral device (whether or not control over such state variables is also passed to the peripheral device) may be included in the initial offload request to optimize the number of interactions between the peripheral device and host stack. This can be done if either the state object does not contain a delegated state or the host stack can ensure that the delegated state variables will not change between the initial offload request and the completion of the offload request.

An upload can be directly initiated by either the peripheral device 104 or the switch 108. The upload can also be indirectly initiated by an intermediate layer 102 because, for example, the intermediate layer 102 invalidated a path or neighbor entry. Once the upload is initiated, the peripheral device 104 completes all outstanding requests and hands the state objects back to the host stack. The switch 108 queues any further transmit requests and stops posting receive buffers to the peripheral device 104. During the upload the intermediate layers of the host stack regain control of the state object(s), and finish the upload request. After the upload request has completed, the peripheral device 104 then frees resources that are no longer being used due to the upload.

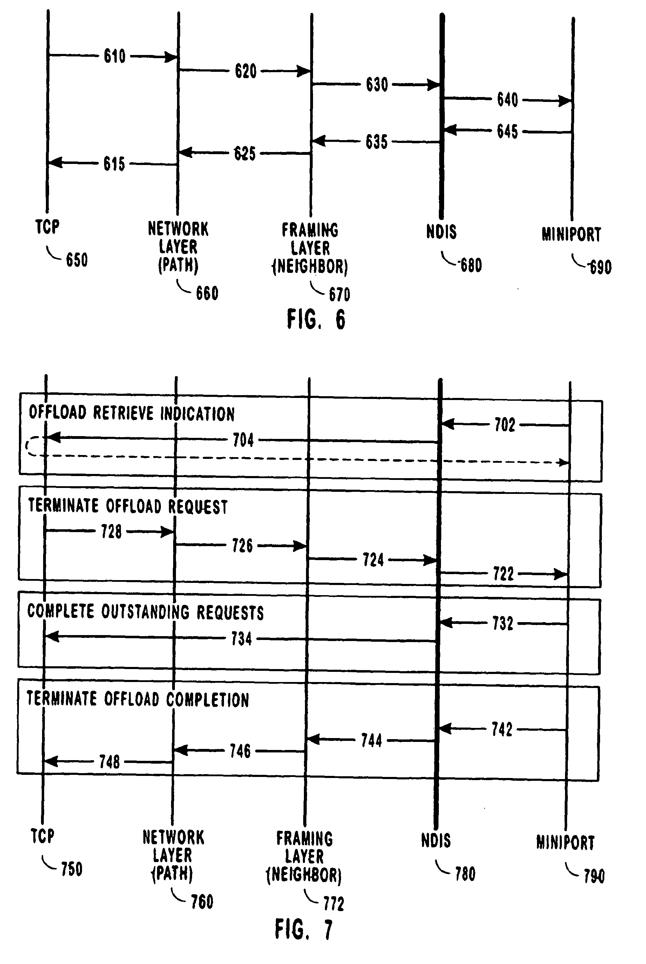

Under some situations, data for a specific connection or state object may arrive through another peripheral device or may be required to be processed by the host protocol stack (for example, IP fragments or route flaps which cause a TCP segment to arrive on a different network interface). If this occurs, an intermediate layer 106 may also have a forwarding interface to forward the received data to the peripheral device 104. An intermediate layer 106 may attempt to forward data to the peripheral device 104 while the peripheral device is in the middle of uploading the associated connection or state object. Thus the peripheral device 104 may no longer have control of the state object necessary to process the data packets. If this occurs, the peripheral device 104 returns an error message to the intermediate layer 106 indicating an upload is in progress. The error message informs the intermediate layer 106 to stop forwarding incoming data and to buffer further data until the intermediate layer receives the state object. Alternatively, at the expense of additional buffer memory on the peripheral device 104, the incoming data could be forwarded to the peripheral device 104 for the peripheral device 104 to buffer the data and provide the data when the uploading of the state object has completed. (Figure 7 describes the upload process in greater detail).

Multiple connections may be off-loaded by an intermediate software layer 106 to the peripheral device 104. A reference counter is maintained by the intermediate software layer 106 of the number of upper layer state objects (i.e., state objects of layers above the intermediate software layer 106) which reference the intermediate software layer's state object for offload. A state object as used herein is a collection of state variables (also referred to as "states") for a particular layer. As previously mentioned, such state variables may be categorized as CONST, CACHED, or DELEGATED. If the number of references to a specific intermediate layer's offloaded state object is decremented to zero (for example, during an upload request), the intermediate layer 106 sends a message to the peripheral device 104 to upload the state object for the intermediate layer, send corresponding delegated state variables to the intermediate layer 106 and delete the state object for the intermediate layer 106. Note that the upload request may occur during the original upload request that caused the reference count to be decremented to zero, or at a later time

Figure 2 describes an embodiment in accordance with the present invention where the hardware layer 214 includes a peripheral device that may be, for example, a Network Interface Card (NIC). In addition, Figure 2 illustrates a software layer that includes a switch 206 (i.e., Transport Layer Interface (TLI) switch 206), and a network stack 220 that comprises a Transport Layer 201, a Network Layer 202, and a Framing Layer 203. The Network Layer 202 is also known as a "Path Layer" and the Framing Layer 203 is also known as a "Neighbor Layer".

In general, an application 200 sends networked messages through network stack 220 to the peripheral device (e.g., hardware 214) during operation. Data sent from the application 200 travels through the TLI switch 206, which controls whether the data goes down the host based network stack 220 or the chimney 230. Note that the TLI switch 206 may be incorporated into the top layer of the network stack 220. The software layers in the network stack 220 receive data from the application 200, package the data in a packet form, and send the resulting packets to the peripheral device hardware 214 via NDIS minidriver 210. The software layer also provides the opposite functionality when a network packet is received as it hands the payload to the application. Other tasks the network stack 220 may perform as a data packet passes through the stack 220 includes data encryption and decryption, reliable data transmission, and calculation or checking of a message digest (e.g., checksum or CRC for the data packet). Many of these tasks are performed by the host processor if not offloaded and are processor intensive.

The TLI switch 206 is used to offload stack operations from the CPU to the peripheral device by sending data for offloaded connections to the peripheral device via chimney 230 and chimney driver 212. One skilled in the art will appreciate after reading the specification and claims that the NDIS driver 210 and the chimney driver 212 may be the same actual driver. Those skilled in the art will also recognize that the upper edge of NDIS minidriver 210 and chimney driver 212 is the NDIS API in the MICROSOFT® WINDOWS® operating systems. For purposes of explanation, a Transmission Control Protocol (TCP) based protocol stack will be used to explain the invention. However, one of ordinary skill in the art will appreciate after having reviewed this description that many types of peripheral devices may be used and other network stacks may be offloaded using the principles in accordance with the present invention. For example, stream control transmission protocol (SCTP) or user datagram protocol (UDP) based protocol stacks, Remote DMA (RMDA), or IPSEC encryption/decryption may be offloaded. Additionally, the invention may also be used to offload higher function protocols such as the internet Small Computer System Interface (iSCSI), the Network File System (NFS), or the Common Interface File System (CIFS). The offloaded protocol may be connection-oriented (e.g., TCP) or connectionless (e.g., IPSEC).

There are many reasons for performing a network connection offload. By way of example, and not limitation, some of the reasons are provided below. A system administrator could select a specific service to be offloaded. A specific connection may be offloaded if traffic (in terms of number of bytes or packets) is consuming a significant amount of resources. In addition, certain types of services may be offloaded such as IPSEC services. In addition, administrative policies may drive processing offloads. For example, an administrator may have a policy that all connections from within an organization are offloaded first or all connections for a specific application are offloaded first. System resources (e.g., CPU utilization, data cache use, page table cache use, memory bandwidth) being used may lead the host processor to offload connections.

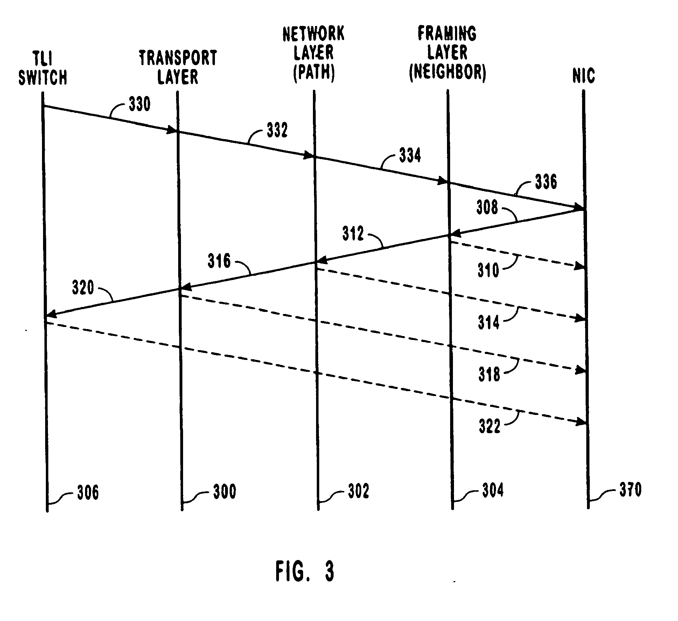

Figure 3 illustrates a three step process taken to offload a TCP connection, where the application layer 200 in Figure 2 is not shown, but would be to the left of TLI switch 306. In addition, the peripheral device 370 is shown in Figure 3 as a NIC simply for purposes of illustration, though other types of peripheral devices could perform the same or similar function in accordance with the present invention, including a general purpose CPU with a network adaptor. In general, Figure 3 illustrates that the process allocates resources required to offload the TCP-connection, provide handles to each of the layers 300, 302, 304, 306 and offloads the state for each of the layers 300, 302, 304, 306 to the peripheral device 370. During the offload transition, the TLI switch 306 buffers all messages sent from the application. Alternatively, the Transport Layer 300 buffers the data. When the offload is complete, the buffered data is transferred to the peripheral device 370. When incoming packets are received during the offload transition, the peripheral device 370 continues to move the data up through the layers 300, 302, 304, 306 until the Transport Layer delegated state is handed to the peripheral device 370. If the Transport Layer 300 received incoming packets during the offload transition, it will forward the data to the NIC 370 as part of the transport state object delegated state or separately.

The TLI switch 306 initiates the offload by sending the Transport Layer 300 an offload request 330. The offload request includes a pointer to the next layer's local state (e.g., a TCB pointer for Transport Layer 300, an RCE pointer for Network Layer 302, an ARP entry pointer for the Framing Layer 304 or an NDIS miniport pointer for the NDIS minidriver 210). The offload request also includes the offload type (e.g., TCP for TLI switch 306, IPv6 for Network Layer 302, and so forth), and resource information that helps the peripheral device 370 decide whether it can successfully offload the TCP connection. The TLI switch 306 may also provide an offload handle to the peripheral device 370. The TLI switch 306 will stop sending application send or receive buffers to the Transport Layer 300 and will queue them and wait for the Transport Layer 300 to send a completion message 320.

The Transport Layer 300 either refuses the offload request or sends an offload request 332 to Network Layer 302 with TCP resource information added to the TLI switch resource information. The Transport Layer 300 may also provide an offload handle to the peripheral device 370. If there are any outstanding application send or receive buffers pending, the Transport Layer 300 returns the buffers to the TLI switch 306.

The Network Layer 302 receives the offload request 332 and either refuses to offload the connection or sends an offload request 334 to the Framing Layer 304 with network resource requirements added to the TCP resource information and the TLI switch resource information. The Network Layer 302 may also provide an offload handle to the peripheral device 370.

The Framing Layer 304 either refuses to offload the connection or sends an offload request 336 to the peripheral device 370 with framing resource requirements added to the network resource requirements, the TCP resource information and the TLI switch resource information. The Framing Layer 304 may also provide an offload handle to the peripheral device 370.

The peripheral device 370 receives the offload request and calculates whether it has resources available to offload the TCP connection. If the NIC decides the offload is not possible, it refuses the offload request. If the NIC decides the offload is possible, it accepts the offload request and allocates resources (e.g., TCB, route cache entry (RCE), address resolution protocol (ARP) table entry (ATE)) for the connection. The peripheral device 370 creates a linked list of parameters and dispatch tables to hand to the layers 300, 302, 304 and 306 and completes the offload request by sending a completion message 308 having the linked list of parameters to the Framing Layer 304. The parameters include an offload handle and dispatch table for each of the layers 300, 302, 304, 306.

As used herein, an offload handle means a mechanism to allow a software layer to communicate with the peripheral device or a peripheral device to communicate with a software layer. By way of example and not limitation, an offload handle may be a pointer-based handle, an integer value used as a lookup into an array, a hash table (e.g., a hashing function), a communication channel between the software layer (or network stack) and the peripheral device, or a set of parameters passed down by a software layer that the peripheral device uses to look up the state object.

By way of example and not limitation, the mechanism to communicate between the intermediate software layers (306, 300, 302, and 304) and the peripheral device 370, referred to as a dispatch table, can be a function call pointer, used as a lookup into an array, a hash table (e.g., a hashing function), a communication channel between the software layer (or network stack) and the peripheral device, or a set of parameters passed down by a software layer that the peripheral device uses to look up the state object. The dispatch table could be exchanged during peripheral device initialization or at a later time.

The dispatch tables are used to send data directly to the peripheral device 370 or receive data directly from the peripheral device 370. The dispatch tables can also be used to provide diagnostics. For example, a software layer could be inserted between two intermediate layers or between the bottom most intermediate layer and the peripheral device to monitor the system and inject faults to make sure the system is functioning properly. Additionally, the dispatch table can be patched by software layers that can add additional functionality if needed. For example, a software layer could be added to provide the functionality of a filter driver or a virtual peripheral device. Patching is typically done by overwriting the dispatch table with function pointers for the inserted intermediate layer. Then when the function pointer for the inserted intermediate layer is called and the inserted intermediate layer has finished its work, the inserted intermediate layer calls the original function pointer from the original dispatch table.

When the Framing Layer 304 receives the completion message, the Framing Layer 304 stores the offload handle and dispatch table for the Framing Layer in its ARP Table Entry for easy updates (e.g. the destination MAC address changes or the encapsulation type changes). The Framing Layer 304 then updates 310 the peripheral device 370 with the state associated with the ATE. The Framing Layer 304 removes its state from the linked list and forwards 312 the remaining information in the linked list to the Network Layer 302.

The Network Layer 302 stores the offload handle and dispatch table for the Network Layer 302. The Network Layer 302 then updates 314 the peripheral device 370 with the state associated with the RCE. The Network Layer 302 removes Network Layer information from the linked list and sends a completion message 316 having the linked list of parameters and dispatch tables to the Transport Layer 300. The Network Layer 302 may forward any buffered IP fragments it received during the offload to the peripheral device 370 for processing or it may process the IP fragments in the Network Layer and forward them to the Transport Layer 300.

The Transport Layer 300 stores the offload handle for the Transport Layer and sends 318 its state to the peripheral device 370. In alternate embodiment, the Transport Layer and the TLI switch are the same layer. The Transport Layer then sends 320 the completion message.

In an alternate embodiment, the layer's state object is sent with the offload request. For example, the Framing Layer state object, Network Layer state object, and Transport Layer state object is sent with the offload request, and only updated if the cached state changes between the offload request and the completion event. The entire layer state object can only be sent with the offload request if the delegated state is either not present or cannot change between the offload request and the completion of the offload request. If a message is received that would change DELEGATED state during the offload sequence, that message will not generally be processed (should be buffered), and when the offload completes, the message must be forwarded to the offload peripheral device for processing. However, state variables classified as CACHED may be sent with the offload request and may change between the offload request and the completion of the offload request. If this occurs, changes in the CACHED state change must be recorded, and when the offload completes, the CACHED state must be updated in the peripheral device.

Once the TLI switch 306 receives the completion message 320, the TLI switch 306 transfers 322 the application send and receive buffers to the peripheral device 370. The TLI switch 306 uses the dispatch table to post all outstanding and future receive buffers and sends to the NIC 370 for processing. During the time the offload request takes to complete, each layer 300, 302, and 304 either refuses new offload requests for the offloaded state object (i.e., the state object associated with a layer) or queues them until the offload is complete. In an alternate embodiment, the application buffers are handed down in the initial offload request.

The Transport Layer 300 may still have the ability to process incoming TCP data and hand the TCP payload to the TLI switch 306 if the transport state object was not offloaded to the peripheral device 370 in the initial offload request 332. If incoming TCP data arrives through the network stack 302 after this time, the incoming data is forwarded to the peripheral device 370 to be processed by the peripheral device.

On subsequent offload requests, the Network Layer 302 and the Framing Layer 304 pass the offload handles they received from the peripheral device 370 from the prior offload to the peripheral device 370. This signals to the peripheral device 370 that the peripheral device 370 has already allocated resources for the Network Layer 302 and Framing Layer 304, which conserves peripheral device 370 resources and speeds up the offload.

As indicated previously, the layers 300, 302, 304 pass their state to the peripheral device 370. Each state has three types of state variables: CONST, CACHED, and DELEGATED. CONST state variables are, as implied by name, constants that never change during the life of the offloaded connection. Thus, the host will not need to read CONST state variables back to the layers when the connection is terminated. Similarly, the host processor maintains ownership of CACHED state variables and ensures that any changes to a CACHED variable in the host proocessor are updated in the peripheral device 370. As a result, the host will write but never read back the CACHED state variables (unless system diagnostics requests it). The host CPU, therefore, transfers ownership only of DELEGATED state variables to the peripheral device 370. The DELEGATED state variables are written one time when the offload occurs, and are read back when the offload is terminated. Since the peripheral device (e.g., NIC) only needs to transfer back the DELEGATED state variables, the overhead of transferring the connection back to the host is minimized. Furthermore, the host CPU queries the peripheral device 370 for DELEGATED state variables only when needed (e.g., for statistics).

The CONST state variables for the Transport Layer 300 can include the destination port, the source port, one or more flags to control transport layer behavior (e.g. whether window scaling is enabled or SACK is enabled), SEND and RECV window scale factors, and the initial maximum segment size advertised by the remote endpoint (Remote MSS). As already described herein, the value of each such aforementioned TCP CONST variable is constant - its value does not change during the life of a TCP connection.

The CACHED state variables for the Transport Layer 300 can be TCP state variables and IP state variables. IP state variables may be required in the transport structure if the implementation enables the network layer values to be overwritten on a per connection basis. These CACHED state variables can include one or more flags (e.g. whether the "Nagle" algorithm, or whether TCP "Keep-Alives" are enabled) as well as the "Keep-Alive" settings (i.e., interval, number of probes, and delta), Effective Maximum Segment Size (or Effective MSS), initial default receive window (InitialRcvWnd), the number of bytes to be copied in the receive indicate by the peripheral device 370, Type of Service (TOS) that prioritizes packets according to traffic types for IPv4, and finally traffic class and flow label to enable IPv6 packets to be prioritized in the network.

The DELEGATED state variables can include current TCP state as specified in the Internet Engineering Task Force (IETF) RFC 793, one or more flags (e.g. was the connection abortively closed by the remote peer), a sequence number for the next expected TCP receive segment (i.e., RCV.NEXT), receive window size (RCV.WND), the sequence number for the first Un-Acknowledged Data (SND.UNA), the sequence number for next TCP segment to be sent (SND.NEXT), the send window size (SND.WND), the segment sequence number used for the last window update (SndWL1), the segment acknowledgement number used for the last window update (SndWL2), the maximum sequence number ever sent (SND.MAX), the Maximum Send Window (MAX_WIN), and the current Congestion Window (CWnd).

The DELEGATED state variables can further include, a Slow Start Threshold (SSTHRESH), the smoothed round trip time (SRTT), the round-trip time variation (RttVar), the timestamp value to send in the next TCP ACK (TsRecent), how long ago the most recent timestamp was received (TsRecentAge), how many ACKs have been accepted for the same sequence number (DupAckCont), the number of keepalive probes that have been sent (KeepAlive ProbeCount), the time remaining until the next keepalive timeout (KeepAlive TimeoutDelta), the number of retransmits that have been sent (KeepAlive Count), the time remaining until the next retransmit timeout (Retransmit TimeoutDelta), and a pointer to buffered receive data (BufferedData - TCP data that was received while the offload or upload was in progress).

The CONST state variables for the Network Layer 302 may include the destination IP address (for either IPv4 or IPv6) and the source IP address (for either IPv4 or IPv6). The CACHED state variables for the Network Layer 302 may include the path maximum transmission unit (PathMTU). The DELEGATED state variables for the Network Layer 302 may include the IP Packet ID start value. The CACHED state variables for the Framing Layer 304 may include the destination Media Access Control (MAC) address, parameters for IETF RFC 2461 Neighbor Discovery (Host reachability delta and NIC reachability delta) and a flag to indicate the format of the header (e.g., LLC/SNAP (Logical Link Control/Sub-Network Access Protocol) format or DIX (Digital, Intel, Xerox) format).

The Transport Layer state may includes a handle for the Network Layer state object and the Network Layer state may includes a handle for the FramingLayer state object because the Network Layer (also referred to as "Path") state can be shared between multiple connections and the Framing Layer (also referred to as "Neighbor") state can be shared between multiple paths (e.g., all traffic going through one router). This hierarchy is maintained for several reasons. A connection may require a NIC handle for the Network Layer because the IP ID namespace may be managed across all offloaded connections on a per path basis or because an update of the Path MTU can be done once at the Network Layer and effect all TCP connections, rather than individually setting it for each TCP connection. A path requires a NIC handle for the Framing Layer state object because a route update could change the next hop address, thus pointing to a new MAC address. The hierarchy also condenses the amount of state required to be maintained by the NIC. For example, an ARP update for IPv4 could change the mapping from an IP address to a MAC address (e.g., an interface failed over on the server). The host maintains the MAC address as a-cached variable, thus it only needs to do a single update of the cached state and all connections are failed over to the new interface.

Once the host has offloaded a TCP connection, the peripheral device 370 is responsible for assigning packet identifiers (e.g., IP IDs) for the packets it sends using IPv4. IP ID is offloaded on either a per interface basis or a per layer state object basis. In either case, the peripheral device 370 is assigned a portion of the IP ID namespace. In one embodiment, the peripheral device 370 is assigned half of the total IP ID namespace when it is initialized, and the host protocol stack maintains its portion of the IP_ID namespace on a per peripheral device basis. Another embodiment enables the host protocol stack to maintain the IP_ID namespace on a per path basis. The peripheral device is given an IP packet ID start value to use when the network state object is passed to the peripheral device 370. The peripheral device 370 uses the following formula to generate an IP ID on IP packets it sends:

$$Cur\_IPID = [(Start\_IPID\_For\_This\_Path) + (Counter\_For\_This\_Path)mod32K]mod\ 64K$$

$$Counter\_For\_This\_Path = Counter\_For\_This\_Path + 1$$

When the offloaded connection is either uploaded or invalidated, the peripheral device 370 transfers the next IPID value it would use to the Network Layer to store for the next offload that occurs and the host processing unit 320 continues to use the portion of the IP ID namespace it was assigned. The host processing unit 320 could use the full IP ID name space, but preferably only after the maximum lifetime of the IP packets on the network has been exceeded.

The peripheral device 370 places data into receive buffers in the order the data is received and fills application buffers in the order they are posted for the offloaded connection. Many applications wait for a receive indication before posting a receive buffer. In one embodiment, the peripheral device 370 has a global pool of buffers to use if data arrives for a connection and no application receive buffers have been posted. The global pool of buffers is used across the offloaded connections and may be used to implement: 1) handling of out-of-order TCP transmissions; 2) de-fragmenting IP datagrams; 3) a buffer copy algorithm rather than a zero copy algorithm if the application is posting buffers that are too small for a zero copy algorithm; and 4) an indicate mechanism to indicate data to the application when the application has not preposted buffers. Alternatively, a per-connection pool of buffers may be used if efficient use of buffer resources is not a concern. In this case, the global pool of buffers is only used if the application did not pre-post buffers or for lack of system resources (e.g., not enough resources to pin the application buffer in memory).

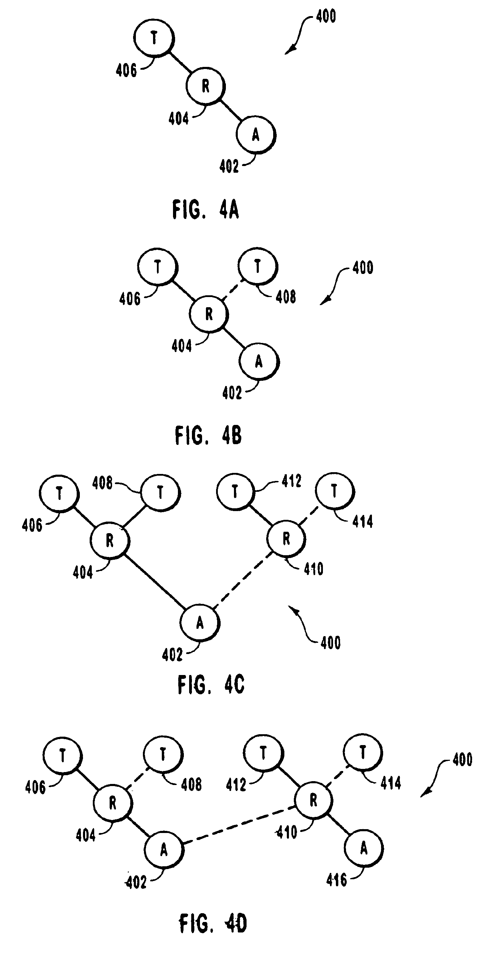

Turning now to Figures 4A-4D, a typical peripheral device (e.g., a NIC) that has received an offload may have an inverted tree data structure 400, which is representative of the offload. In the figures, dotted lines represent new states allocated by the peripheral device. In Figure 4A, the peripheral device has an ARP entry 402 coupled to a route cache entry 404 that is coupled to a network connection as a TCP entry 406. If, for example, all network connection (e.g., TCP) traffic is going to a router, the next hop will always be to the same ARP entry 402. If the route cache entry 404 is to be used for the next network connection offload, the only new resource is the new offloaded TCP state object. Thus when the host CPU initiates an offload down the network protocol stack, the intermediate software layers that have already offloaded their state (e.g. Network Layer 302 and Framing Layer 304) would simply insert the peripheral device generated offload handle that was allocated on the previous offload request. The peripheral device 170 only has to allocate new resources (e.g. TCP entry 408) and send offload handles for the new resources back up the network protocol stack.

The inverted tree 400 now has TCP entry 408 coupled to the route cache entry 404 (see Figure 4b). This approach saves peripheral device resources and speeds up the offload. Additionally, if a cached variable state changes, only a single structure needs to be updated. If all state for the various software layers in the chimney were offloaded as a single entry, any state update below the top software layer would require multiple updates.

Figure 4C shows the inverted tree 400 with a more complex configuration. There are two route cache entries, 404 and 410, that go through ARP table entry 402. TCP network connections 406 and 408 utilize route cache entry 404. TCP network connections 412 and 414 reference route cache entry 410. If any ARP update occurs (e.g., a multi-homed server's interface fails over using a gratuitous ARP update), only entry 402 must be updated. This enables potentially thousands or hundreds of thousands of connections to be failed-over to a new interface with only a single update to the peripheral device required. Figure 4D shows two independent inverted trees (entries 402-408 and entries 410-416) merged into a single inverted tree 400 after a route update occurs. Before the route update, the next hop ARP entry for route cache entry 410 is ARP table entry 416. After the route update, the next hop ARP table entry is ARP table entry 402. Thus, the use of an inverted tree enables route updates to be processed as a single transaction to the peripheral device, rather than thousands or tens of thousands of updates if the state for the framing layer, network layer, and transport layer were offloaded as a single entry. Importantly, the inverted tree concept can be extended to offload multiple connections at a time.

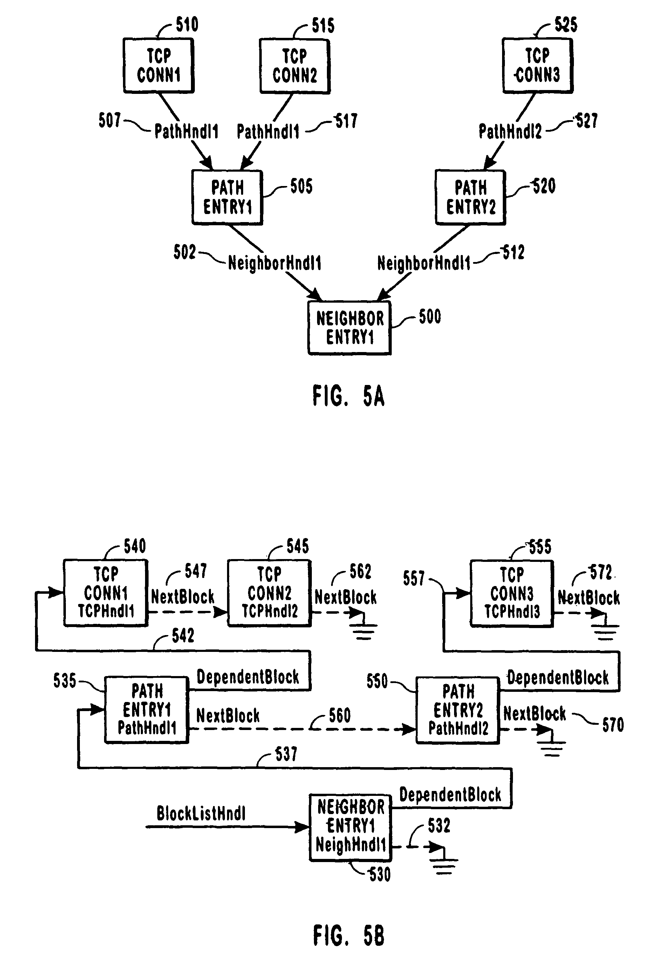

Figures 5A and 5B illustrate an additional feature in accordance with the present invention with specific reference to a block list handle (or "block list"). In general, a block list is a data structure that is given to an Offload Target (eg., a peripheral device) during Chimney Offload or Chimney Termination. Thus, the component that is processing a network connection sends the block list back to the host in the case of "upload", and down to the peripheral device in the case of "offload" so that the initial point of reference is arbitrary. The block list data structure comprises a series of pointers that point to specific next layer state object (Dependent Block) or to state objects at the same layer (Next Block).

More particularly, a Dependent Block pointer points to the next level up in the hierarchy and is used to inform the Offload Target of any existing dependencies between intermediate software layers in the network protocol stack. For example, a Neighbor (or Framing Layer) state object will be dependent on a Path (or Network Layer) state object, which may be dependent on the TCP connection of the same hierarchy. A Next Block pointer, however, points to a data structure that is at the same level in a different hierarchy. For example, a Path (or Network Layer) state object in a first TCP connection may point to a Path state object in a different TCP connection.

Figure 5A illustrates an inverted tree data structure, as similarly shown in Figures 4A-4D. The inverted tree of Figure 5A shows two TCP connections 510 and 515 (i.e., TCP Conn1 and TCP Conn2) that have different TCP layer state-entries, but a common Path (or Network Layer) state entry 505, and common Neighbor state entry 500. A different network connection 525 (i.e., TCP Conn3), however, has a separate Path state entry 520, but a common neighbor state entry 500. The entire sequence hierarchy can be defined between each software layer by a series of path handles that direct the connection to the next software layer. For example, path handles 507 and 517 direct TCP state entries 510 and 515 respectively to Path state entry 505, which in turn has a handle 502 directing it to Neighbor state entry 500. Similarly, TCP state entry 525 has a handle 527 that points to a Path state entry 520, which in turn is directed to common Neighbor state entry 500 via handle 512. In accordance with the present invention, Figure 5A can also be expressed in terms of Next block pointers, to thereby include multiple network connection chimneys at once.

Figure 5B illustrates how the block list handle (collection of various Next and Dependent block pointers) relates several network connection blocks among different network connections for simultaneous offload. As in Figure 5A, Figure 5B denotes the inverted tree in terms of software layer blocks that include the various software state handles. Shown are TCP blocks 540 and 545 with a common Path block 535, and a common Neighbor block 530. A third TCP block 555 has a Path block 550 and the same Neighbor block 530. The block list handle would state that Neighbor block 530 include a Dependent Block pointer 537 that points to Path block 535. In contrast with the prior inverted tree of Figure 5A, however, the Neighbor block 530 may also point to another inverted tree data structure through Next Block pointer 532. If the Next Block pointer 532 is missing (e.g., a NULL value), this may signal in the block list that there are no other inverted trees at that layer of the inverted tree. Similarly, Path block 535 has a Next Block pointer 560 that points to Path block 550, an entirely different connection "branch" of the inverted tree.

As in the case of the Neighbor block 530, both Path blocks 535 and 550 each have Dependent block pointers 542 and 557 respectively, and a Next Block pointer 560 and 570 respectively, such that Path block 550 may also point to a different connection Path of an entirely different inverted tree (e.g. 572). In addition, each of the TCP blocks 540, 545, and 555 have Next Block Pointers 547, 562 and 572 that may point to another TCP block in the same inverted tree (e.g., 547), or may indicate that there are no more blocks in the this tree (e.g. 562 and 572). These pointers are not, however, static. That is, the links may change such as if a route for a path changes, it may change the next neighbor to a different route. In that case, for example, Path block 550 might change the neighbor state entry it uses from Neighbor Entry 1 530 to some other neighbor, (e.g. Neighbor Entry 2 (not shown)). Accordingly, the use of a block list enables multiple connections, paths, and neighbor entries to be offloaded or terminated in a single program call.

By way only of example and not of limitation, a first offload request might require the Offload Target (e.g., a NIC) to allocate state and a handle for each of the data structures (e.g., 540, 545, 535, 530, etc.), and return the Offload Target's handle to the host network protocol stack. If the Offload Target allocated handle in a specific entry is invalid, the state object is a new offload request. Subsequent offload requests by the host stack might reuse existing Path or Neighbor state entries. The block list may contain just one state object for each layer (for example, a single Neighbor state object, Path state object, and a TCP state object), or it may be the more complex structure defined in Figures 5A-5B. This more complex structure, as noted, enables multiple connections, Paths, and Neighbor entries to be offloaded or terminated in a single program call.

Once the host has offloaded the connection(s) as indicated, one or more software layers may need to update changes in their respective state object(s). Figure 6 illustrates a possible signal sequence in accordance with the present invention between intermediate software layers in a network protocol stack for updating a cached state portion of a state object in the present invention. As already noted, this is done when a software layer updates a peripheral device with changes in the layer's CACHED state variable. Updating the CACHED state variable of the state object allows the intermediate software layer and peripheral device state to be consistent.

Accordingly, Figure 6 shows that, as each software layer updates its CACHED state variable with the peripheral device, each software layer sends an update signal down the network protocol stack until it reaches the miniport driver 690. For example, if the TCP layer 650 needs to update its CACHED state variable with the peripheral device, the TCP layer 650 sends a signal 610 to the Network Layer (Path) 660, which sends an update signal 620 to the Framing Layer (Neighbor) 670, which in turn sends an update signal 630 to the Network Driver Interface Specification (NDIS) 680, which sends a signal 640 to the Miniport driver 690. Once the CACHED state variable has been updated with the peripheral device, the Miniport driver 690 relays a signal 645 to NDIS 680, which continues the set of relays 635, 625, and 615 to the TCP layer signaling that the TCP CACHED state variable has been updated with the peripheral device.

Since the present invention uses the block list data structure, these series of updates and confirmation steps need only occur at the software layer that initially updated the CACHED state variable. That is, for example, if the Framing Layer (Neighbor) 670 needed to update its CACHED state variable portion of its state object with the NIC, only steps 630, 640, 645, and 635 would need to occur. The upper software layers of the network protocol stack, therefore, would not need to participate in the signal relay for updating the Framing Layer's CACHED state. This ability to update multiple connection state changes with the block list also enables a high degree of connection integrity for each of the offloaded network connections. In an alternative embodiment, the update communication can be allowed to occur directly between the software layer performing the update and the Miniport driver 690. However this requires a large number of call interfaces to the Miniport Driver 690, and is not as easily extensible as additional network protocol layers are added to the offload.

If the host CPU or peripheral device needs to terminate the offloaded connection or state object, the present invention proposes a similar sequence of signaling steps. As a preliminary matter, either the host or the Offload Target can terminate an offload. An intermediate protocol layer can also indirectly terminate an offloaded TCP connection by terminating the Path or Neighbor State Object that the TCP connection depended upon. This will eventually cause a TCP connection timeout, which will cause the Offload Target to request that the TCP connection offload be terminated. A connection offload may be terminated for a variety of reasons. In general, there will be an administrative mechanism to tell the protocol stack to offload specific connections. If an Offload Target requests termination of offload for a connection that the administrator directed to be offloaded, the host will grant the termination, and an event will be logged for the administrator.

Alternatively, if the network interface goes down (e.g., media disconnect event), the Offload Target should not request termination of offloaded State Objects. The host will be notified of the event through the normal signaling event and will decide on the best course of action. As well, if the connection is reset (this occurs when a TCP RST segment is received), the Offload Target will indicate to the host that the connection offload should be terminated. If the next-hop address changes, causing the Neighbor state object to be changed, the host stack will ensure that the new state object is created before the old state object is invalidated. This allows the Offload Target to be certain that if a Neighbor or Path state object is no longer valid, it is not because of a temporary race condition in Path and/or Neighbor state object updates from the host stack.

Figure 7 illustrates a possible signal sequence in accordance with the present invention between intermediate software layers in a network protocol stack wherein the peripheral device requests termination of an offloaded TCP connection. In the event a peripheral device decides to terminate an offload, the peripheral device requests the host stack to terminate the offload by calling an "indicate" function (as advertised by the host stack), and includes a reason the peripheral device wishes to terminate the offload. This reason may be a variety of reasons, including a situation where the peripheral device does not support a specific network protocol layer feature, such as it received urgent data and doesn't support it. The peripheral device termination request, for example, follows a series of signals (702, 704) through the protocol layers that begins with a call 702 from the Miniport driver 790 to NDIS 780, which in turn sends a termination request signal 704 to the TCP layer 750. If the host grants the peripheral device's termination request, the host confirms the request by sending a signal to the Miniport driver 790.

Once the host stack decides to terminate the offload, Figure 7 illustrates that the host stack sends a signal through each of the intermediate software layers alerting the intermediate layers of the termination. For example, TCP 750 sends 728 a signal to the Network Layer 760 of the termination, the Network Layer sends 726 a signal to the Framing Layer 770 of the termination, and on down through the network protocol stack with signals 724 and 722. In the case of the highest layer (e.g. TCP) of the intermediate software layer, once the TCP Transport Layer 750 (i.e., Transport Layer 300) requests the termination, the TCP (or Transport) Layer will stop posting new application send or receive buffers to the Offload Target, and will start buffering any received TCP Segments until the peripheral device has successfully uploaded the network connection(s). By contrast, each lower software layer in the network protocol stack will check to see if the respective layer is the last dependent block list data structure for their state object. If the respective intermediate layer has no more dependent blocks, then the respective layer will also request termination of their respective state object by adding an additional block list data structure to the list, and include an Offload Target handle for the intermediate layer's respective state object. If it does have additional dependent blocks, it will simply forward the upload request to the next layer without requesting upload of its state object. See signals 724 and 722.

When the Offload Target (e.g., the peripheral device) has confirmed the requested termination through the network protocol stack, the Offload Target ceases processing incoming network connection data, and brings the processing of the outgoing network connection data to a consistent state. With respect to outstanding requests (i.e., the application layer has posted network connection data buffers before confirming the offload termination), the Offload Target responds with a status signal (732, 734) back up through the network protocol stack that state, that a connection "upload" is "in progress". If there is any received network connection data for which the peripheral device has already acknowledged reception to the remote computer (i.e., a remote peer computer on the WAN), but the host's application has not yet posted a buffer to consume it (for eventual processing), then the peripheral device will package this posted buffer as part of the TCP DELEGATED state variable that it returns to the intermediate software layers.

In either case, the peripheral device returns control (e.g., signals 744, 746, 748) of each DELEGATED state variable (e.g., through NDIS 780) for each intermediate software level so that the host CPU regains control of the DELEGATED states. Thus, the Offload Target ensures that a consistent snapshot of the requested DELEGATED state from the various layers is made, fills the state into the state structures associated with the OffloadBlockList structures, and calls the terminate offload completion function (742). Again, because of the offloaded block list data structure, the connection termination call may be done for one or several connections at once.

One or more virtual device driver(s) may also be provided that manages one or more physical peripheral device drivers, such as one or more NIC drivers. The virtual device driver may expose a single Media Access Control (MAC) address to the host stack, and provide a mapping between the host stack and the one or more peripheral device drivers that the virtual driver manages. Or the virtual device driver may effectively provide multiple logical interfaces to the host stack for one (or more) physical peripheral devices, enabling the host stack to manage network traffic as if there are more networks than there are physical peripheral devices. Consequently, the peripheral device drivers are abstracted in such a way that the host stack sees one or more virtual device driver(s), and thus has no knowledge of the underlying one or more peripheral device drivers. Note that the virtual device driver may be separate from the physical device drivers or may be embedded within them.

The virtual peripheral device is enabled in the current invention by allowing it to participate in the peripheral initialization process, such that it can redirect all calls to the physical devices through itself, and potentially advertise greater or fewer virtual peripheral devices to the host stack than there are physical peripheral devices in the system.

During data transfer, for failover support within the team of peripheral devices, the virtual peripheral device can detect if a specific physical device has failed. There are a variety of mechanisms to support this, including detecting if the media sense has been lost, or by a constant heartbeat from the offloaded peripheral device to the network switch in the form of a signal repeated over fixed intervals. If the peripheral device detects that the heartbeat is lost (by, for example, no longer detecting the signal) the peripheral device driver signals this event to the virtual peripheral device.

The invention enables the virtual peripheral device to recover the offloaded state objects and attempt to move the network traffic to another peripheral device in the team. The virtual peripheral device can do this in a variety of ways, either by utilizing the host network stack to manage stack while the failover to another physical peripheral device occurs, or by halting new protocol offload requests and moving the state objects to the new physical peripheral device itself.

If the virtual peripheral device chooses to allow the host protocol stack to manage the offloaded state objects or connections (in the case of TCP) during the transition, the virtual peripheral device requests that the host protocol stack to cease offloading connections to the peripheral device and upload the existing state objects that the host has already offloaded to the peripheral device. Until the virtual peripheral device re-enables offload, the host processes the links or connections in its intermediate software layers.

The virtual device driver has knowledge of all available peripheral devices in a team of one or more peripheral devices. Once a peripheral device has failed, the virtual device driver then selects a new peripheral device that may be capable of receiving an offload of the connections or state objects. The virtual device driver detects what resources the new peripheral device may have, and initializes any state required in the peripheral device. Once the peripheral device has been initialized, the virtual device re-enables the offload of state objects.

When the host stack is re-enabled to offload to a specific virtual peripheral device, it re-queries the virtual peripheral for its offload capabilities. The host will use the new list of capabilities to select which state objects or connections can be offloaded. This may result in re-offloading the connections to the virtual peripheral (and consequently the new peripheral device) by transferring control of the inverted tree (i.e., by transferring the delegated, cached, and const state variables), depending on the new peripheral device capabilities that were advertised. Alternatively, if the new physical peripheral device does not support offload, the host will simply continue processing the connections itself through the intermediate software layers, rather than attempt to offload them.

Alternatively, the virtual peripheral device may choose to manage the transition of offloaded state objects between peripherals itself. If this is done the virtual peripheral device can still use the above described sequence of events to stall offload requests while it moves the state directly (rather than moving the offloaded state objects back to the host protocol stack), and advertise any changes in capabilities when the failover has completed.

Since the host maintains consistent state as offload capabilities vary, even though specific state objects or connections may be offloaded, and since the host may renegotiate parameters with a new peripheral device in the event of failover of an initial peripheral device, the present invention provides a novel, robust method of offloading and uploading one or more state objects or connections at once, regardless of peripheral device failure.

If the virtual peripheral device is configured to support multiple virtual LANs on one or more physical peripheral devices, the virtual peripheral device would again intercept the physical device initialization, and instead advertise one or more virtual peripheral devices to the host stack, and ensure that all calls made to a specific virtual adapter are mapped to the appropriate virtual LAN tag and physical peripheral device. During offload the Virtual ID is transferred in the initial offload request, either by adding to the Framing Layer state object or by creating a new state object for the virtual peripheral device. Specifically, the invention enables the virtual device to insert a structure into the BlockList structure, immediately under the Framing Layer structure in the BlockList, or to add to the Framing Layer BlockList state object the VID. The former approach also enables the virtual peripheral device to specify to the physical peripheral device opaque data (potentially vendor proprietary data). When the connection is uploaded, if an additional state object was added by the virtual peripheral device during offload, the virtual peripheral device removes the structure and hands the rest of the Block List to the host protocol stack.

The present invention may also be described in terms of methods, comprising functional steps, and/or non-functional acts. The following is a description of acts and steps that may be performed in practicing the present invention. Usually functional steps describe the invention in terms of results that are accomplished, whereas non-functional acts describe more specific actions for achieving a particular result. Although the functional steps and non-functional acts may be described or claimed in a particular order, the present invention is not necessarily limited -to any particular ordering or combination of acts and/or steps.

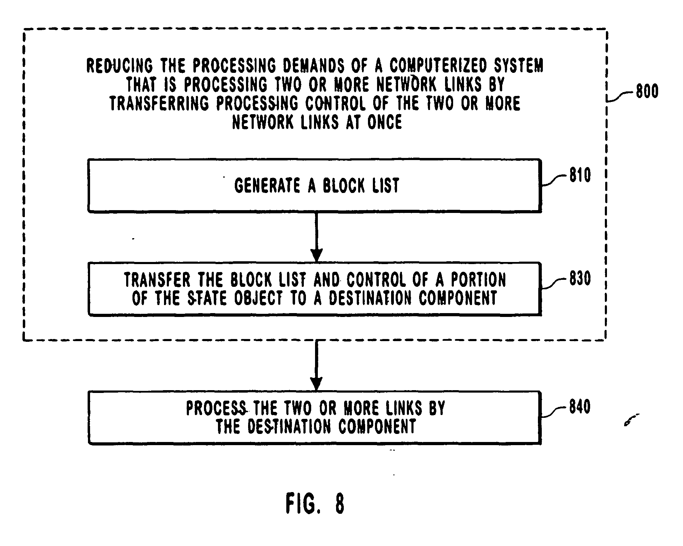

Figure 8 illustrates a flow chart for implementing a method for transferring control between one or more destination component devices and one or more source component devices, the control needed to process a plurality of network connections in order to relieve the processing load of the source component while still maintaining integrity of the established network connections. Figure 8 shows that this method for practicing the present invention includes the step 800 of reducing the processing demands of a computerized system that is processing two or more network connections by transferring processing control of two or more network connections at once. Ideally, this step 800 should be performed in a way that preserves the integrity for the two or more network connections with regard to state changes, failover events, and VLAN tags.

Step 800 may be accomplished by performing the specific act 810 of generating a block list. Act 810 can include generating a block list, the block list comprising a series of block pointers corresponding to sequential software layers for two or more network connection data paths over a network protocol stack. For example, the Act 810 may be performed by generating a Next block pointer that points to the same state layer in a different connection data path (e.g., a pointer 532 between two different Neighbor layer 530 states) through the network protocol stack, or may point to the same state layer (e.g., a pointer 547 between TCP 540 and TCP 545) within the same connection data path (e.g., 535) through the network protocol stack.

Step 800 also includes the specific act 830 of transferring the block list and control of a portion of the state object to a destination component. The portion of each software layer's state object may comprise one or more DELEGATED, CACHED, and CONST state variables. The host stack may then indicate to each software layer (e.g., by sending a control signal 330, 332, 334, 336) to send to a peripheral component (e.g., a peripheral device) the software layer's values for the CACHED, and CONST state variables, and that the layer will need to transfer-control of the layer's DELEGATED state variable to the peripheral-component.

The source component may then give the block list to the Offload Target (e.g., peripheral device, during offload, CPU during upload) during Chimney Offload or during Chimney Termination (or offload termination). In addition, the offload will not be complete until the source component has given control of at least the DELEGATED state variable for the offloaded software layers it is either offloading or uploading. Thus the offload (or upload) is completed for multiple connections from one or more inverted trees after the specific act of transferring the block list and the respective DELEGATED state variables from the source component to the destination component (and possibly CACHED AND CONST if the destination component does not already have them) .

The method of Figure 8 illustrates further that after performing step 800 (via acts 810, 820, and 830), the method comprises performing the specific act 840 of processing the two or more connections by the destination component. As inferred from the previous discussion, act 840 includes processing the two or more connections by the destination component after the transfer, wherein, if the block list and control of each state object data structure portion is transferred to the software layer, processing the connections in a central processing unit over the intermediate software layers, and if the block list and control of each state object portion is transferred to the peripheral device, processing the connection in the peripheral device.

For example, in the case of multiple connection upload, the peripheral device transfers back network processing control to the intermediate software layers to the CPU to be processed through the ordinary network protocol stack. In the case of multiple network connection offload, however, the CPU transfers network processing control to the peripheral device by transferring the block list and the respective CACHED, CONST, and DELEGATED states of the intermediate software layers to the peripheral device to be processed through a chimney. The present invention may be practiced both with long-lived and short-lived connections. With particular reference to short-lived connections, such as short-lived TCP connections, the CPU may offload each short-lived connection during the "slow-start" phase of the data transfer.

By way of explanation, when a remote computer makes, for example, a short-lived HTTP connection with a server, the server does not ordinarily respond to the remote computer's request by sending the requested data all at once. In most cases, the server transfers data slowly at first in order assess the connection bandwidth, and to avoid overflowing the remote computer or any other devices or links in the path. To make this assessment, the server will send the requested data to the remote computer iteratively in incrementing number of data packets. For example, the server may send a 500 byte packet, wait for an acknowledgment from the remote computer, then send two 500 byte packets (1000 byte packet), wait for an acknowledgment from the remote computer, and then five 500 byte packets, and so on until the server reaches a maximum data transfer rate with the remote computer.

Thus, if the remote computer has only a 28.8Kbps (kilobits per second) dial-up connection, the server may ultimately transfer the data only at a certain rate (data packets per second), whereas if the remote computer has a 1000 Mbps (millions of bits per second) broadband connection, the server may ultimately transfer the data at a much higher rate. This incremental data send rate ("slow start") provides a certain time lag window that is typically greater than the time needed to transfer control of a short-lived connection between a CPU and peripheral device. Accordingly, in part since the present method provides for offloading multiple connections at once, the "slow-start" transfer window makes the present invention particularly suited to transferring processing control of both long and short-lived network connections, particularly when there are numerous connections to be offloaded.

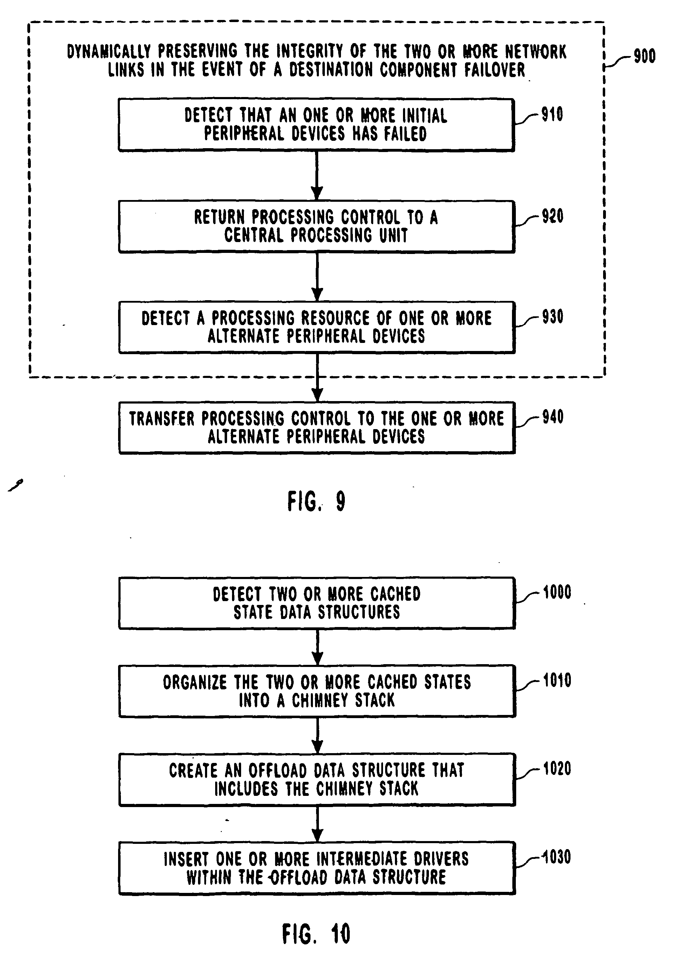

Figure 9 illustrates a flow chart for implementing a method for transferring a plurality of offloaded aggregated network links from one or more of the peripheral devices that has failed to another peripheral device that is capable of receiving the plurality of offloaded connections, while still maintaining integrity of each of the established, aggregated network links. Figure 9 illustrates implementing this embodiment in accordance with the present invention by performing the functional step 900 of dynamically preserving the integrity of one or more aggregated network links in the event of a destination component failover. As noted, this step should be performed so that the one or more aggregated network links can be processed at one or more destination components that have not failed (i.e., alternate destination components). In addition, step 900 includes the specific act 910 of detecting that one or more initial peripheral devices have failed. Act 910 includes detecting that one or more initial peripheral devise with processing control of one or more aggregated network links have failed.

By way only of example and not limitation, network links may be "aggregated" (i.e., several links over several peripheral devices treated as one network link) such as in a ''teamed NIC" environment (e.g., 802.3ad). A host CPU in accordance with the present invention may offload processing network processing tasks to the teamed peripheral devices by sending one or more block lists and one or more DELEGATED states from the intermediate software layers to the one or more initial peripheral devices. Since these aggregated links can be quite large, connection integrity may be of some importance to the CPU. Thus, the host CPU might need to detect when one or more of the peripheral devices is no longer capable of processing the offloaded network links.

To do so, in an embodiment where a NIC is the peripheral device, there may be a constant "pulse" from the offloaded peripheral device and the network on the link in the form of a signal repeated over fixed intervals. This pulse may be, for example, in the form of a continuous electrical signal between the NIC and a network device (e.g., a network router) that lets the NIC know that an aggregated link is still active. Thus, when the pulse stops, or the network device sends the pulse in the form of an error message of some sort, or the host administrator directs the components to fail over, the host recognizes that the NIC is no longer able to perform the offloaded tasks.

Step 900 also includes the specific act 920 of returning processing control to a central processing unit. Act 920 includes returning processing control of the-one or more aggregated network links from the initial peripheral device to a central processing unit. For example, the NIC can request that the host CPU upload block lists and DELEGATED state variables, which were offloaded previously for multiple network links, in response to an error or failure signal (e.g., signals 702, 704, and 708). The NIC must then transfer the block list(s) and control of the respective DELEGATED state variables to the host CPU through the intermediate software layers in the network protocol stack.

Step 900 also includes the specific act 930 of detecting a processing resource of the different one or more alternate peripheral devices. Act 930 includes detecting the resource capabilities of one or more alternate peripheral devices that are capable of receiving the aggregated links. For example, one or more different NICs may have much greater or far fewer resource capabilities than the failover NICs, such that they have different data size processing capabilities, or slower/faster processors, etc. In addition, the connections may be of such a nature that only a few of the connections may be processed by the different NICs (i.e., the alternate one or more NICs do not support certain security parameters), or that the NIC can only handle processing a relatively small number of connections at once. Accordingly, the invention provides for negotiating parameters with the new one or more NICs by manipulating one or more of the block list(s), and the respective state object(s) so that the new one or more NICs can take the offloaded connections effectively. In one embodiment, the detection of failover events, and detection of new, capable peripheral devices to handle the transfer can be done by the virtual device driver as described herein, and as also described as the intermediate driver in Figure 10. This ability to negotiate parameters with the different (new) one or more NICs allows for seamless failover support of multiple connection offloads.

Figure 9 further illustrates implementing the inventive method by following functional step 900 with the specific act 940 of transferring network link processing control to the one or more alternate peripheral devices. Act 940 includes transferring processing control of the one or more aggregated network links to the one or more alternate peripheral devices. For example, after the host has negotiated parameters with the one or more new peripheral devices (e.g., NICs), the host stack can then transfer the respective block lists and control of the respective DELEGATED states for the appropriate one or more intermediate software layers. Once the host has transferred the block lists and DELEGATED states to the appropriate one or more alternate NICs, the one or more alternate NICs may then process the aggregated network links, and thereby relieve host of these network processing duties.

Figure 10 illustrates a flow chart for implementing one embodiment in accordance with the present invention, wherein the invention performs a method of inserting an intermediate driver (such as a virtual peripheral device driver) adjacent an offload data structure in order to better facilitate, during a network connection offload and/ or upload process, at least one of a virtual local area network and 802.3ad failover event. With specific reference to the flowchart, the inventive embodiment includes the specific act 1000 of detecting two or more CACHED state data structures. Act 1000 includes detecting two or more CACHED state data structures corresponding with two or more state objects of one or more intermediate software layers in a network protocol stack.

For example, an application layer may send an indicate signal (e.g., 330, 332, 334) to each network layer in a network protocol stack to determine the extent of each layer's state object, and what, if any, processes the layers may need to upload. Since the only state variable for which the host will .grant processing control to the peripheral device is the CACHED state variable, the application layer will need to query each layer to see which layer's will offload a CACHED state variable. In the multiple connection case, at least two CACHED states variables will be detected in the same intermediate software layer of the network protocol stack.

The inventive method illustrated in Figure 10 also includes the specific act 1010 of organizing the two or more CACHED states into a chimney stack. Act 1010 includes organizing the two or more CACHED state data structures sequentially into a chimney stack data structure, wherein offloading the chimney stack data structure to a peripheral device provides the peripheral device with processor control over the two or more CACHED state data structures. For example, after the software layers have indicated their CACHED state variables, the host process reads the CACHED states to the NIC in the correct processing order. In the case of a single network link, this sequence of states over the software layers may appear as a single branch (e.g. Figure 4A) of the inverted tree described herein. In the case of multiple network links, the sequence of CACHED states combined with a block list that organizes several next and dependent block pointers may appear as an inverted tree of data structure blocks (e.g., Figure 5B). In any case, the chimney comprises a single data structure that is offloaded to the NIC. As implied by name the chimney data structure is somewhat like a physical chimney in a building in the sense that data only enters at a single data interface, leaves at a different single interface, and has no outside interaction with other operators while it is being processed (or traveling), much like smoke traveling through a physical chimney.

In addition, the method illustrated in Figure 10 further includes the specific act 1020 of creating an offload data structure that includes the chimney stack. For example, a chimney data structure (e.g., 308) may additionally be coupled with a chimney driver data structure, one or more Network Driver Interface "Specification (NDIS) data structures, and a miniport driver data structure. The entire set of data structures may be combined as a composite offload data structure.

The inventive method of Figure 10 also includes the specific act 1030 of inserting an intermediate driver within the offload data structure. For example, an intermediate driver may need to be inserted in the offload data structure to handle more specific needs among multiple or aggregated links. The intermediate driver could be generated by the host stack upon initiation of offload. In the case of 802.3ad aggregated links, an Intermediate driver (IM driver) could be inserted in the offload structure to coordinate resources and connections among two more "teamed" NICs. Alternatively, multiple intermediate drivers could be created to represent a single peripheral device, such as a single NIC, or a general purpose CPU, and then inserted into the offload data structure. In the case of virtual local area networks (VLANs), one or more IM drivers may need to translate VLAN tags attached to incoming data packets.

By way of explanation, a network administrator may wish only certain groups of an organization to see each other's documents, though all are on the same network. VLANs help accommodate this by tagging data such that only members of certain virtual networks may access each other's computer data. That is, on the same network, an administrator may organize several VLANs such that members of a "Research" VLAN cannot see the member's computers on the "Marketing" VLAN. VLANs can create special complications to offloading multiple long or short-lived connections Since the offload stack may not be able to decipher VLAN data tags. This may be in part since an incoming data packet might contain multiple VLAN tags which must be deciphered before or after processing the network connection.

Accordingly, the invention provides for inserting one or more intermediate drivers (whether a single intermediate driver based on multiple peripheral devices, or multiple intermediate drivers based on a single peripheral device) in the offload data structure that can de-multiplex a data packet containing two or more VLAN tags, and process the data traffic appropriately. This VLAN functionality is generally allocated by the Framing Layer.

One will appreciate in view of the present application and claims, however, that the one or more intermediate drivers could also handle functions allocated by the Network Layer, such as securing data traffic through an IPSEC protocol. This can be in addition to the Framing Layer functions of allocating VLAN tags. For example, an intermediate driver can perform the functions of adding an authentication header on a data packet, or encapsulating the data packet, or both. This can be done regardless of, or in addition to, any additional VLAN tag management allocated through the Framing Layer. Accordingly, the present invention provides data structures and drivers that can be practiced in a wide variety of environments, including environments requiring secure links.

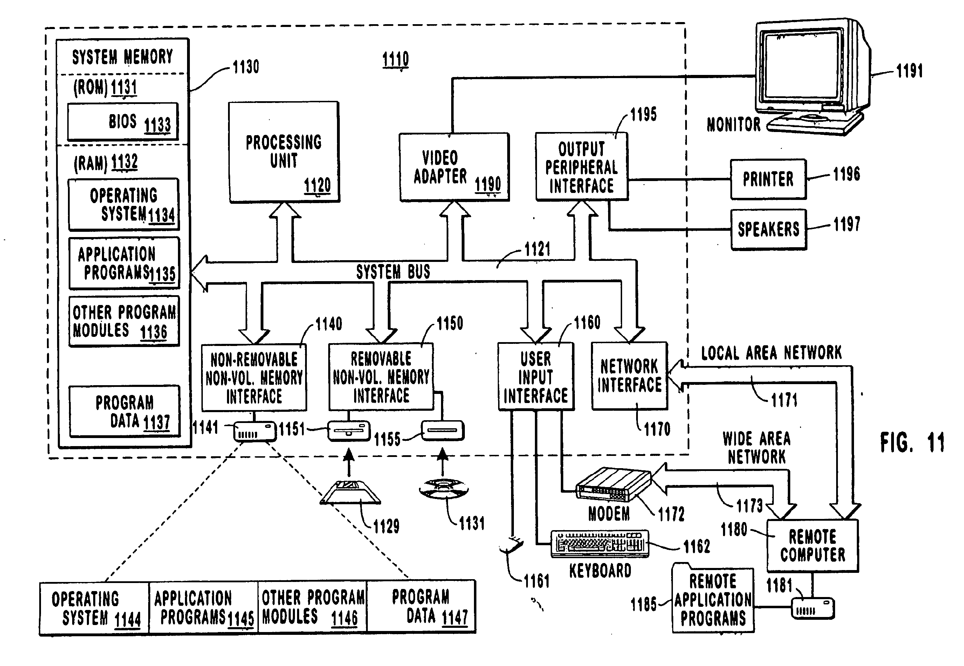

Figure 11 and the following discussion are intended to provide a brief, general description of a suitable computing environment in which the invention may be implemented. Although not required, the invention will be described in the general context of computer-executable instructions, such as program modules, being executed by computers in network environments. Generally, program modules include routines, programs, objects, components, data structures, etc. that perform particular tasks or implement particular abstract data types. Computer-executable instructions, associated data structures, and program modules represent examples of the program code means for executing steps of the methods disclosed herein. The particular sequence of such executable instructions or associated data structures represents examples of corresponding acts for implementing the functions described in such steps.

Those skilled in the art will appreciate that the invention may be practiced in network computing environments with many types of computer system configurations, including personal computers, hand-held devices, multi-processor systems, microprocessor-based or programmable consumer electronics, network PCs, minicomputers, mainframe computers, and the like. The invention may also be practiced in distributed computing environments where local and remote processing devices perform tasks and are linked (either by hardwired links, wireless links, or by a combination of hardwired or wireless links) through a communications network. In a distributed computing environment, program modules may be located in both local and remote memory storage devices.

With reference to Figure 11, an exemplary system for implementing the invention includes a general-purpose computing device in the form of a conventional computer 1120, including a processing unit 1121, a system memory 1122, and a system bus 1123 that couples various system components including the system memory 1122 to the processing unit 1121. The system bus 1123 may be any of several types of bus structures including a memory bus or memory controller, a peripheral bus, and a local bus using any of a variety of bus architectures. The system memory includes read only memory (ROM) 1124 and random access memory (RAM) 1125. A basic input/output system (BIOS) 1126, containing the basic routines that help transfer information between elements within the computer 1120, such as during start-up, may be stored in ROM 1124.

The computer 1120 may also include a magnetic hard disk drive 1127 for reading from and writing to a magnetic hard disk 1139, a magnetic disk drive 1128 for reading from or writing to a removable magnetic disk 1129, and an optical disc drive 1130 for reading from or writing to removable optical disc 1131 such as a CD ROM or other optical media. The magnetic hard disk drive 1127, magnetic-disk drive 1128, and optical disc drive 1130 are connected to the system bus 1123 by a hard disk drive interface 1132, a magnetic disk drive-interface 1133, and an optical drive interface 1134, respectively. The drives and their associated computer-readable media provide nonvolatile storage of computer-executable instructions, data structures, program modules and other data for the computer 1120. Although the exemplary environment described herein employs a magnetic hard disk 1139, a removable magnetic disk 1129 and a removable optical disc 1131, other types of computer readable media for storing data can be used, including magnetic cassettes, flash memory cards, digital versatile disks, Bernoulli cartridges, RAMs, ROMs, and the like.

Program code means comprising one or more program modules may be stored on the hard disk 1139, magnetic disk 1129, optical disc 1131, ROM 1124 or RAM 1125, including an operating system 1135, one or more application programs 1136, other program modules 1137, and program data 1138. A user may enter commands and information into the computer 1120 through keyboard 1140, pointing device 1142, or other input devices (not shown), such as a microphone, joy stick, game pad, satellite dish, scanner, or the like. These and other input devices are often connected to the processing unit 1121 through an interface 1146 coupled to system bus 1123. Alternatively, the input devices may be connected by other interfaces, such as a parallel port, a game port or a universal serial bus (USB). A monitor 1147 or another display device is also connected to system bus 1123 via an interface, such as video adapter 1148. In addition to the monitor, personal computers typically include other peripheral output devices (not shown), such as speakers and printers.

The computer 1120 may operate in a networked environment using logical connections to one or more remote computers, such as remote computers 1149a and 1149b. Remote computers 1149a and 1149b may each be another personal computer, a server, a router, a network PC, a peer device or other common network node, and typically include many or all of the elements described above relative to the-computer 1120, although only memory storage devices 1150a and 1150b and their associated application programs 1136a and 1136b have been illustrated in Figure 11. The logical connections depicted in Figure 11 include a local area network (LAN) 1151 and a wide area network (WAN) 1152 that are presented here by way of example and not limitation. Such networking environments are commonplace in office-wide or enterprise-wide computer networks, intranets and the Internet.

When used in a LAN networking environment, the computer 1120 is connected to the local network 1151 through a network interface or adapter 1153. When used in a WAN networking environment, the computer 1120 may include a modem 1154, a wireless link, or other means for establishing communications over the wide area network 1152, such as the Internet. The modem 1154, which may be internal or external, is connected to the system bus 1123 via the serial port interface 1146. In a networked environment, program modules depicted relative to the computer 1120, or portions thereof, may be stored in the remote memory storage device. It will be appreciated that the network connections shown are exemplary and other means of establishing communications over wide area network 1152 may be used.

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

**Claims**

1. A method for transferring control between one or more destination component devices and one or more source component devices in a computerized system comprising a switch (108, 206, 306), and a network protocol stack (102, 220) comprising a sequence of one or more intermediate software layers (106, 201 - 203), each of the intermediate software layers having a state object, the switch being on top of or integrated into the top intermediate software layer, the control needed to process a plurality of state objects while still maintaining integrity of established network communications, the method comprising the following:

   an act of generating (810) a hierarchical offload data structure comprising a plurality of state objects of one or more intermediate software layers, wherein each of the one or more intermediate software layers corresponds to a level of the hierarchical offload data structure;
   an act of transferring (830) from a source component device to a destination component device two or more state objects in the same intermediate software layer of the offload data structure; and
   an act of the destination component processing (840) the two or more state objects at the same protocol layer after the transfer;
   wherein the offload data structure includes a block list having at least a next block pointer (547, 560, 562, 570, 572) that points to the same intermediate software layer of a different connection path through the network protocol stack, and a dependent block pointer (537, 542, 557) that points to a different hierarchical layer of the same connection path through the network protocol stack.

2. The method of claim 1, wherein one of the destination component and source component is a peripheral device (104, 270).

3. The method of claim 2, wherein at least one of the two or more state objects includes a cached state variable.

4. The method of claim 2, wherein the act of transferring is performed during the slow-start phase of a TCP connection.

5. The method of claim 2, further comprising an act of inserting (1030) an intermediate driver data structure in the offload data structure, the intermediate driver being adapted to decipher and encapsulate incoming and outgoing data packets, wherein the outgoing data packets are packaged with one or more virtual local area network identifiers, and incoming packets are stripped of one or more virtual local area network identifiers.

6. The method of claim 5, wherein the intermediate driver is adapted to secure network traffic over one or more network links using an IPSEC protocol by performing one or more of adding and removing an authentication header to a data packet, and encrypting and decrypting the data packet.

7. The method of claim 2, further comprising:

an act of the peripheral device generating one or more handles for one or more intermediate software layers, wherein the peripheral device transfers the one or more handles to one or more corresponding host protocol stack layers; and
an act of, if at least one of the intermediate software layers changes cached state, the at least one of the intermediate software layers updating the cached state of the peripheral device.

8. The method of claim 2, wherein a failover event occurs, further comprising:

an act of detecting that one or more links being processed at one or more corresponding peripheral devices have failed, the one or more failed peripheral devices having been given processor control of one or more offload data structures and one or more state objects; and
an act of detecting a different one or more peripheral devices that are adapted to handle processing control of the one or more links by receiving the one or more offload data structures and control of the one or more state objects.

9. The method of claim 8, further comprising transferring to the source component the one or more offload data structures and processing control of the one or more state objects from the one or more failed peripheral devices, thereby uploading (920) processing control of the one or more links from the one or more failed peripheral devices to the source component.

10. The method of claim 9, further comprising an act of detecting a processing resource of the different one or more peripheral devices; and adjusting the one or more state objects that have been uploaded from the one or more failed peripheral devices to match the detected resource of the different one or more peripheral devices, so that the one or more links can be processed at the different one or more peripheral devices rather than at the failed one or more peripheral devices.

11. The method of claim 10, wherein the one or more links are aggregated 802.3ad links.

12. The method of claim 8, further comprising:

an act of detecting (930) a processing resource of the different one or more peripheral devices;
if one of the one or more offloaded state objects can be processed by the different one or more peripheral devices based on the detected processing resource, transferring (940) processing control of the one or more offloaded state objects to the different one or more peripheral devices; and
if the one or more offloaded state objects cannot be processed by the different one or more peripheral devices based on the detected processing resource, transferring processing control of the one or more offloaded state objects to the network protocol stack.

13. The method of claim 12, wherein the one or more links are aggregated 802.3ad links.

14. The method of claim 1, wherein the computerized system is processing two or more state objects corresponding to the same intermediate software layer, and wherein maintaining integrity comprises preserving the integrity of network communications with regard to state changes, failover events, and VLAN tags.

15. The method of claim 14, further comprising a step for updating the destination component in the event of a change in the state object, or in the event of a change in the offload data structure.

16. The method of claim 14, wherein the destination component is a peripheral device.

17. The method of claim 16, wherein the step for updating the destination component includes the following:

an act of the peripheral device generating one or more handles for one or more intermediate software layers, wherein the peripheral device transfers the one or more handles to one or more corresponding host protocol stack layers; and

an act of, if at least one of the intermediate software layers changes cached state, the at least one of the intermediate software layers updating the cached state of the peripheral device.

18. The method of claim 16, further comprising a step for dynamically preserving the integrity of the network communications in the event of a failover event by processing one or more aggregated network links at a different one or more peripheral devices.

19. The method of claim 18, wherein the step for dynamically preserving the integrity of the network communications includes:

an act of detecting that one or more links being processed at one or more corresponding peripheral devices have failed, the one or more failed peripheral devices having been given processor control of one or more offload data structures and one or more state objects;

an act of detecting a different one or more peripheral devices that are adapted to handle processing control of the one or more links by receiving the one or more offload data structures and control of the one or more state objects; and

an act of detecting (940) a processing resource of the different one or more peripheral devices;

if one of the one or more offloaded state objects can be processed by the different one or more peripheral devices based on the detected processing resource, transferring (940) processing control of the one or more offloaded state objects to the different one or more peripheral devices; and

if the one or more offloaded state objects cannot be processed by the different one or more peripheral devices based on the detected processing resource, transferring processing control of the one or more offloaded state objects to the network protocol stack.

20. The method of claim 1 wherein the plurality of state objects are of a plurality of short-lived network connections, wherein the act of transferring comprises transferring two or more short-lived network connections in the same intermediate software layer of the offload data structure, and wherein the act of processing comprises processing the two or more short-lived connections after the transfer.

21. The method of claim 20, wherein one of the destination component and source component is a peripheral device (104, 270).

22. The method of claim 21, wherein a state object includes a cached state variable, and one or more of a constant state variable, and a delegated state variable.

23. The method of claim 21, wherein the act of transferring the two or more short-lived connections is performed during the slow-start phase of a TCP connection

24. The method of claim 21, further comprising an act of inserting (1030) an intermediate driver data structure in the offload data structure, the intermediate driver being adapted to decipher and encapsulate incoming and outgoing data packets, wherein the outgoing data packets are packaged with one or more virtual local area network identifiers and incoming packets are stripped of one or more virtual local area network identifiers.

25. The method of claim 24, wherein the intermediate driver is adapted to secure network traffic over one or more network links using an IPSEC protocol by performing one or more of adding and removing an authentication header to a data packet, and encrypting and decrypting the data packet.

26. The method of claim 21, further comprising:

an act of generating a handle for each layer of the intermediate software layers, wherein the peripheral device transfers the handle for each intermediate software layer to each intermediate software layer; and

an act of, if at least one of the intermediate software layers changes cached state, the at least one of the intermediate software layers updating the cached state of the peripheral device.

27. The method of claim 21, further comprising:

an act of detecting that one or more links being processed at one or more corresponding peripheral devices have failed, the one or more failed peripheral devices having been given processor control of the two or more short-lived network connections; and

an act of detecting a different one or more peripheral devices that are adapted to handle processing control of the one or more links by receiving the two or more short-lived network connections.

28. The method of claim 27, further comprising transferring to the source component the offload data structure and processing control of the two or more state objects from the one or more failed peripheral devices, thereby uploading processing control of the one or more links from the one or more failed peripheral devices to the source component.

29. The method of claim 28, further comprising an act of detecting (930) a processing resource of the different one or more peripheral devices; and adjusting the one or more state objects that have been uploaded from the one or more failed peripheral devices to match the detected resource of the different one or more peripheral devices, so that the one or more links can be processed at the different one or more peripheral devices rather than at the failed one or more peripheral devices.

30. The method of claim 29, wherein the one or more links are aggregated 802.3ad links.

31. The method of claim 27, further comprising:

an act of detecting (930) a processing resource of the different one or more peripheral devices;

if one of the one or more offloaded state objects can be processed by the different one or more peripheral devices based on the detected processing resource, transferring (940) processing control of the one or more offloaded state objects to the different one or more peripheral devices; and

if the one or more offloaded state objects cannot be processed by the different one or more peripheral devices based on the detected processing resource, transferring processing control of the one or more offloaded state objects to the network protocol stack.

32. The method of claim 31, wherein the one or more links are aggregated 802.3ad links.

33. The method of claim 1 being for transferring a plurality of offloaded state objects from one or more peripheral devices (104, 270) that have failed to another peripheral device, while still maintaining integrity of the established network communication, wherein the computerized system further comprises a central processing unit (1120), and a plurality of peripheral devices (1170), the method further comprising:

an act of detecting that one or more links being processed at one or more peripheral devices have failed, the one or more failed peripheral devices having been given processing control of one or more state objects;

an act of detecting a different one or more peripheral devices that are adapted to handle processing control of only the one or more links;

an act of detecting a different one or more peripheral devices that are adapted to receive processing control of the one or more links and one or more state objects;

an act of detecting (930) a processing resource of any of the detected different one or more peripheral devices; and

an act of transferring (940) processing control to the one or more detected different one or more peripheral devices.

34. The method of claim 33, further comprising:

if the different one or more peripheral devices are adapted to handle processing control of only the one or more links based on the detected processing resource, an act of transferring (940) processing control of only the one or more links to the different one or more peripheral devices;

if the different one or more peripheral devices are adapted to handle processing control of one or more links and one or more state objects based on the detected processing resource, an act of transferring processing control of the one or more links and the one or more offloaded state objects to the different one or more peripheral devices; and

an act of transferring processing control of any remaining of the one or more links and any remaining of the one or more offloaded state objects to the central processing unit.

**35.** The method of claim 34, wherein one or more of the offloaded state objects include at least a cached state variable.

**36.** The method of claim 34, wherein the one or more links are aggregated 802.3ad links.

**37.** The method of claim 34, further comprising, prior to the act of transferring processing control of the one or more links and the one or more offloaded state objects, inserting an intermediate driver adjacent a data structure comprising the offloaded state objects, the intermediate driver capable of performing at least one of multiplexing one or more VLAN tags, de-multiplexing one or more VLAN tags, directing network state object traffic over one or more peripheral devices, and securing network data packets using an IPSEC protocol.

**38.** The method of claim 1 wherein the computerized system comprises a host processing unit (1120), and one or more peripheral devices (1170), and wherein at least some of the intermediate software layers have a state object, the method for inserting an intermediate driver being a virtual peripheral device driver in order to better facilitate, during a network connection offload and/ or upload process, a virtual local area network, the method comprising:

an act of inserting (1030) one or more intermediate driver data structures within the offload data structure; and wherein the act of transferring comprises transferring from the source component device to one or more peripheral devices (104, 270) the two or more state objects.

**39.** The method of claim 38, wherein a failover event occurs, an intermediate driver corresponding with at least one of the one or more intermediate driver data structures performs a method comprising:

an act of detecting that one or more links being processed at one or more peripheral devices have failed, the one or more peripheral devices having been given processing control of one or more state objects; an act of detecting a different one or more peripheral devices that are adapted to handle processing control of only the one or more links; an act of detecting a different one or more peripheral devices that are adapted to receive processing control of the one or more links and one or more state objects; and an act of detecting (930) a processing resource of any of the detected one or more peripheral devices.

**40.** The method of claim 38, wherein the one or more intermediate driver data structures are inserted into the offload data structure prior to offloading processing control of the offload data structure to the one or more peripheral devices.

**41.** The method of claim 38, wherein the one or more intermediate driver data structures are inserted at the point of initiating an offload request of the offload data structure to the one or more peripheral devices.

**42.** The method of claim 41, wherein, at least one of the one or more intermediate drivers includes instructions for performing an act of directing a sub-data packet to a VLAN address based on a virtual LAN tag associated with the sub-data packet, the instructions further comprising and at least one of:

an act of receiving a multiplexed data packet; an act of de-multiplexing the data packet into one or more sub-data packets; an act of multiplexing a data packet; and an act of sending a multiplexed data packet.

**43.** The method of claim 38, wherein the offload data structure corresponds with two or more state objects corresponding to the same intermediate software layer, and wherein the two or more state objects point to a single state object at a lower software layer of a network protocol stack, wherein the offload data structure has the appearance of an inverted tree.

**44.** The method of claim 43, further comprising an act of transferring processing control of the entire inverted tree offload data structure to one or more of the one or more peripheral devices.

**45.** The method of claim 44, further comprising an act of transferring processing control of one or more of the state objects of the inverted tree offload data structure from the at least one of the one or more peripheral devices to the host protocol stack.

**46.** The method of claim 45, wherein the act of transferring from the source component device to one or more peripheral devices the two or more state objects occurs in response to an act of detecting that at least one of the one or more peripheral devices has failed.

47. The method of claim 46, wherein an intermediate driver that corresponds with at least one of the one or more intermediate driver data structures performs the method comprising:

an act of detecting that one or more links being processed at one or more peripheral devices have failed, the one or more peripheral devices having been given processing control of one or more state objects;

an act of detecting a different one or more peripheral devices that are adapted to handle processing control of only the one or more links;

an act of detecting a different one or more peripheral devices that are adapted to receive processing control of the one or more links and one or more state objects; and

an act of detecting a processing resource of any of the detected one or more peripheral devices;

if the different one or more peripheral devices are adapted to handle processing control of only the one or more links based on the detected processing resource, an act of transferring processing control of only the one or more links to the different one or more peripheral devices;

if the different one or more peripheral devices are adapted to handle processing control of one or more links and one or more state objects based on the detected processing resource, an act of transferring processing control of the one or more links and the one or more offloaded state objects to the different one or more peripheral devices; and

an act of transferring processing control of any remaining of the one or more links and any remaining of the one or more offloaded state objects to the host protocol stack.

48. A computer program product for use in a computerized system comprising a switch (108, 206, 306), and network protocol stack (102, 220) comprising a sequence of one or more intermediate software layers (106, 201 - 203), each of the intermediate software layers having a state object, the switch being on top of or integrated into the top intermediate software layer, the computer program product for implementing a method for transferring control between one or more destination component devices and one or more source component devices, the control needed to process a plurality of state objects while still maintaining integrity of established network communications, the computer program product comprising one or more computer-readable media having thereon computer-executable instructions that, when executed by one or more processors at the host computing system, cause the host computing system to perform the method, the method comprising the following:

an act of generating (810) a hierarchical offload data structure comprising a plurality of state objects of one or more intermediate software layers, wherein each of the one or more intermediate software layers corresponds to a level of the hierarchical offload data structure;

an act of transferring (830) from a source component device to a destination component device two or more state objects in the same intermediate software layer of the offload data structure; and

an act of the destination component processing (840) the two or more state objects at the same protocol layer after the transfer;

wherein the offload data structure includes a block list having at least a next block pointer (547, 560, 562, 570, 572) that points to the same intermediate software layer of a different connection path through the network protocol stack, and a dependent block pointer (537, 542, 557) that points to a different hierarchical layer of the same connection path through the network protocol stack.

49. The computer program product of claim 48, wherein the computer-executable instructions, when executed by the one or more processors, further cause the computerized system to perform the following:

an act of generating a handle for each layer of the intermediate software layers, wherein the destination component is a NIC (104, 270, 1170), and the NIC transfers the handle for each intermediate software layer to each intermediate software layer; and

an act of, if at least one of the intermediate software layers changes cached state, the at least one of the intermediate software layers updating the cached state of the NIC.

50. The computer program product of claim 48, wherein the computer-executable instructions, when executed by the one or more processors, further cause the computerized system to perform the following:

an act of detecting that one or more links being processed at one or more corresponding peripheral devices have failed, the one or more failed peripheral devices having been given processor control of one or more offload data structures and one or more state objects; and

an act of detecting a different one or more peripheral devices that are adapted to handle processing control of the one or more links by receiving the one or more offload data structures and control of the one or more state objects.

**51.** The computer program product of claim 50, wherein the computer-executable instructions, when executed by the one or more processors, further cause the computerized system to perform the following:

an act of detecting (930) a processing resource of the different one or more peripheral devices;

if one of the one or more offloaded state objects can be processed by the different one or more peripheral devices based on the detected processing resource, transferring (940) processing control of the one or more offloaded state objects to the different one or more peripheral devices; and

if the one or more offloaded state objects cannot be processed by the different one or more peripheral devices based on the detected processing resource, transferring processing control of the one or more offloaded state objects to the host protocol stack.

**Patentansprüche**

**1.** Verfahren zur Steuerungsübergabe zwischen einer oder mehreren Zielkomponenteneinrichtungen und einer oder mehreren Quellkomponenteneinrichtungen in einem EDV-System, welches einen Switch (108, 206, 306), und einen Netzwerk-Protokoll-Stapel [stack] umfasst, der eine Reihe von einer oder mehreren Software-Zwischenschichten (106, 201-203) umfasst, wobei jede der Software-Zwischenschichten ein Zustandsobjekt aufweist, wobei der Switch oberhalb der oder integriert in der obersten Software-Zwischenschicht ist, wobei jede Steuerung nötig ist, um eine Vielzahl von Zustandsobjekten zu verarbeiten, während die Integrität einer etablierten Netzwerkkommunikation aufrecht erhalten wird, wobei das Verfahren die folgenden Schritte umfasst:

einen Akt des Erzeugens (810) einer hierarchischen Ablade[offload]-Datenstruktur, die eine Vielzahl von Zustandsobjekten der einen oder mehreren Software-Zwischenschichten umfasst, wobei jede der einen oder mehreren Software-Zwischenschichten einer Ebene [level] der hierarchischen Ablade-Datenstruktur entspricht; einen Akt des Übertragens (830), von einer Quellkomponenteneinrichtung zu einer Zielkomponenteneinrichtung, zweier oder mehrerer Zustandsobjekte in der gleichen Software-Zwischenschicht der Ablade-Datenstruktur; und ein Akt des Verarbeitens (840) der zwei oder mehreren Zustandsobjekte in der gleichen Protokollschicht nach der Übergabe durch die Zielkomponente; wobei die Ablade-Datenstruktur eine Blockliste umfasst, die mindestens einen Nächster-Block-Zeiger (547, 560, 562, 570, 572) aufweist, der auf die gleiche Software-Zwischenschicht eines anderen Verbindungspfades durch den Netzwerkprotokoll-Stapel zeigt, und einen Abhängiger-Block-Zeiger (537, 542, 557), der auf eine andere hierarchische Schicht des gleichen Verbindungspfades durch den Netzwerkprotokoll-Stapel zeigt.

**2.** Verfahren gemäß Anspruch 1, wobei eine der Zielkomponenteneinrichtung und Quellkomponenten eine Peripherieeinrichtung (104, 270) ist.

**3.** Verfahren gemäß Anspruch 2, wobei mindestens eines der zwei oder mehreren Zustandsobjekte eine zwischengespeicherte Zustandsvariable umfasst.

**4.** Verfahren gemäß Anspruch 2, wobei der Akt des Übergebens während der Langsamstartphase einer TCP-Verbindung durchgeführt wird.

**5.** Verfahren gemäß Anspruch 2, des Weiteren umfassend: einen Akt des Einfügens (103) einer Zwischentreiberdatenstruktur in die Ablade-Datenstruktur, wobei der Zwischentreiber eingerichtet ist, um eingehende und ausgehende Datenpakete zu entziffern und einzukapseln, wobei die ausgehenden Datenpakete mit ein oder mehreren virtuellen Local Area Network Identifikatoren gepackt sind, und wobei ein oder mehrere virtuelle Local Area Network Identifikatoren von den eingehenden Paketen abgeschnitten werden.

**6.** Verfahren gemäß Anspruch 5, wobei der Zwischentreiber eingerichtet ist, um einen Netzwerkverkehr über eine oder mehrere Netzwerkverbindungen unter Verwendung eines IPSEC-Protokolls zu sichern durch das Durchführen von einem oder mehreren von: Hinzufügen und Entfernen eines Authentifizierungskopfteils zu einem Datenpaket, und Verschlüsseln und Entschlüsseln des Datenpakets.

7. Verfahren gemäß Anspruch 2, des Weiteren umfassend:

einen Akt des Erzeugens, durch die Peripherieeinrichtung, von einem oder mehreren Handle für eine oder mehrere Software-Zwischenschichten, wobei die Peripherieeinrichtung das eine oder mehrere Handle zu einem oder mehreren entsprechenden Host-Protokoll-Stapelschichten übergibt; und
einen Akt des Aktualisierens des Zwischenspeicherzustands der Peripherieeinrichtung durch die mindestens eine der Software-Zwischenschichten, wenn mindestens eine der Zwischenschichten einen zwischengespeicherten Zustand ändert.

8. Verfahren gemäß Anspruch 2, wobei ein Ausfallsicherungsereignis [failover event] auftritt, des Weiteren umfassend:

einen Akt des Feststellens, das eine oder mehrere Verbindungen, die von einer oder mehreren entsprechenden Peripherieeinrichtungen verarbeitet werden, ausgefallen sind, wobei die eine oder mehreren ausgefallenen Peripherieeinrichtungen über Prozessorsteuerung der ein oder mehreren Ablade-Datenstrukturen und ein oder mehreren Zustandsobjekten verfügen; und
einen Akt des Feststellens von anderen ein oder mehreren Peripherieeinrichtungen, die eingerichtet sind, um eine Steuerungsverarbeitung der einen oder mehreren Verbindungen zu bearbeiten, durch das Empfangen der einen oder mehreren Ablade-Datenstrukturen und Steuerung der ein oder mehreren Zustandsobjekte.

9. Verfahren gemäß Anspruch 8, des Weiteren umfassend Übergeben an die Quellkomponente der einen oder mehreren Ablade-Datenstrukturen und Verarbeitungssteuerung der ein oder mehreren Zustandsobjekte von der einen oder mehreren ausgefallenen Peripherieeinrichtungen, hierbei Hochladen (920) der Verarbeitungssteuerung der einen oder mehreren Verbindungen von den einen oder mehreren ausgefallenen Peripherieeinrichtungen zu der Quellkomponente.

10. Verfahren gemäß Anspruch 9, des Weiteren umfassend: einen Akt des Feststellens einer Verarbeitungsressource der anderen ein oder mehreren Peripherieeinrichtungen, und Einrichten der ein oder mehreren Zustandsobjekte, die von dem ein oder mehreren Peripherieeinrichtungen hochgeladen wurden, um die festgestellte Ressource der ein oder mehreren unterschiedlichen Peripherieeinrichtungen abzugleichen, so dass die ein oder mehreren Verbindungen bei den anderen ein oder mehreren Peripherieeinrichtungen verarbeitet werden können, statt durch die ausgefallenen ein oder mehreren Peripherieeinrichtungen.

11. Verfahren gemäß Anspruch 11, wobei die ein oder mehreren Verbindungen aggregierte 802.3ad-Verbindungen sind.

12. Verfahren gemäß Anspruch 8, des Weiteren umfassend:

einen Akt des Erfassens (930) einer Verarbeitungsressource der anderen ein oder mehreren Peripherieeinrichtungen;
wenn eine der ein oder mehreren abgeladenen Zustandsobjekte durch die anderen ein oder mehreren Peripherieeinrichtungen basierend auf der erkannten Verarbeitungsressource verarbeitet werden kann, Übertragen (940) der Verarbeitungssteuerung der ein oder mehreren abgeladenen Zustandsobjekte zu den anderen ein oder mehreren Peripherieeinrichtungen; und
wenn die ein oder mehreren abgeladenen Zustandsobjekte nicht durch die ein oder mehreren anderen Peripherieeinrichtungen basierend auf der erkannten Verarbeitungsressource verarbeitet werden können, Übergeben der Verarbeitungssteuerung der ein oder mehreren abgeladenen Zustandsobjekte an den Netzwerkprotokoll-Stapel.

13. Verfahren gemäß Anspruch 12, wobei die ein oder mehreren Verbindungen aggregierte 802.3ad-Verbindungen sind.

14. Verfahren gemäß Anspruch 1, wobei das EDV-System zwei oder mehrere Zustandsobjekte verarbeitet, die der gleichen Software-Zwischenschicht entsprechen, und wobei Aufrechterhalten der Integrität ein Beibehalten der Integrität von Netzwerkkommunikation bezüglich Zustandsänderungen, Ausfallsicherungsereignisse und VLAN-Tags umfasst.

15. Verfahren gemäß Anspruch 14, des Weiteren umfassend einen Schritt des Aktualisierens der Zielkomponente im Fall einer Änderung in den Zustandsobjekt, oder im Fall einer Änderung in der abgeladenen Datenstruktur.

**16.** Verfahren gemäß Anspruch 14, wobei die Zielkomponente eine Peripherieeinrichtung ist.

**17.** Verfahren gemäß Anspruch 16, wobei der Schritt des Aktualisierens der Zielkomponente die folgenden Schritte umfasst:

einen Akt des Erzeugens durch die Peripherieeinrichtung von einem oder mehreren Handle für ein oder mehrere Software-Zwischenschichten, wobei die Peripherieeinrichtung das eine oder mehrere Handle zu ein oder mehreren entsprechenden Host-Protokoll-Stapel-Schichten überträgt; und

einen Akt des Aktualisierens des zwischengespeicherten Zustands der Peripherieeinrichtung durch die mindestens eine der Software-Zwischenschichten, wenn mindestens eine der Software-Zwischenschichten einen zwischengespeicherten Zustand ändert.

**18.** Verfahren gemäß Anspruch 16, des Weiteren umfassend einen Schritt des dynamischen Beibehaltens der Integrität der Netzwerkkommunikation in dem Fall eines Ausfallsicherungsereignisses durch Verarbeiten von ein oder mehreren aggregierten Netzwerkverbindungen bei anderen ein oder mehreren Peripherieeinrichtungen.

**19.** Verfahren gemäß Anspruch 18, wobei der Schritt des dynamischen Beibehaltens der Integrität der Netzwerkkommunikation umfasst:

einen Akt des Erfassens, dass ein oder mehrere Verbindungen, die bei ein oder mehreren entsprechenden Peripherieeinrichtungen verarbeitet werden, ausgefallen sind, wobei die ein oder mehreren ausgefallen Peripherieeinrichtungen über Prozessorsteuerung der ein oder mehreren Ablade-Datenstrukturen und ein oder mehreren Zustandsobjekten verfügen;

einen Akt des Erfassens anderer ein oder mehrerer Peripherieeinrichtungen, die eingerichtet sind, um Verarbeitungssteuerung der ein oder mehreren Verbindungen zu bearbeiten durch Empfangen der ein oder mehreren Ablade-Datenstrukturen und Steuerung der ein oder mehreren Zustandsobjekte; und

einen Akt des Erfassens (940) einer Verarbeitungsressource der anderen ein oder mehreren Peripherieeinrichtungen;

wenn eine der ein oder mehreren abgeladenen Zustandsobjekte durch andere ein oder mehrere Peripherieeinrichtungen basierend auf der erfassten Verarbeitungsressource verarbeitet werden kann, Übergeben (940) einer Verarbeitungssteuerung der ein oder mehreren abgeladenen Zustandsobjekte an die anderen ein oder mehreren Peripherieeinrichtungen; und

wenn die ein oder mehreren abgeladenen Zustandsobjekte nicht durch die anderen ein oder mehreren Peripherieeinrichtungen basierend auf der erfassten Verarbeitungsressource verarbeitet werden können, Übergeben einer Verarbeitungssteuerung der ein oder mehreren abgeladenen Zustandsobjekte an den Netzwerkprotokoll-Stapel.

**20.** Verfahren gemäß Anspruch 1, wobei die Vielzahl der Zustandsobjekte eine Vielzahl von kurzlebigen Netzwerkbindungen sind, wobei der Akt des Übergebens umfasst: Übergeben von zwei oder mehreren kurzlebigen Netzwerkverbindungen in der gleichen Software-Zwischenschicht der Ablade-Datenstruktur, und wobei der Akt des Verarbeitens ein Verarbeiten der zwei oder mehreren kurzlebigen Verbindungen nach der Übergabe umfasst.

**21.** Verfahren gemäß Anspruch 20, wobei die Zielkomponente oder die Quellkomponente eine Peripherieeinrichtung (104, 270) ist.

**22.** Verfahren gemäß Anspruch 21, wobei ein Zustandsobjekt eine zwischengespeicherte Zustandsvariable, und ein oder mehrere von einer konstanten Zustandsvariable und einer delegierten Zustandsvariable umfasst.

**23.** Verfahren gemäß Anspruch 21, wobei der Akt des Übergebens der zwei oder mehreren kurzlebigen Verbindungen während der Langsamstartphase einer TCP-Verbindung durchgeführt wird.

**24.** Verfahren gemäß Anspruch 21, des Weiteren umfassend einen Akt des Einfügens (1030) einer Zwischentreiber-Datenstruktur in die Ablade-Datenstruktur, wobei der Zwischentreiber eingerichtet ist, um eingehende und ausgehende Datenpakete zu entziffern und einzukapseln, wobei die ausgehenden Datenpakete mit ein oder mehreren virtuellen Local Area Network Identifikatoren gepackt sind und ein oder mehrere virtuelle Local Area Network Identifikatoren von den eingehenden Paketen abgeschnitten werden.

**25.** Verfahren gemäß Anspruch 24, wobei der Zwischentreiber eingerichtet ist, um Netzwerkverkehr über ein oder mehrere Netzwerkverbindungen zu sichern unter Verwendung eines IPSEC-Protokolls durch das Durchführen von ein oder mehreren von Hinzufügen und Entfernen eines Authentifizierungskopfteils zu einem Datenpaket, und Verschlüsseln und Entschlüsseln des Datenpakets.

26. Verfahren gemäß Anspruch 21, des Weiteren umfassend:

einen Akt des Erzeugens eines Handle für jede Schicht der Software-Zwischenschichten, wobei die Peripherieeinrichtung das Handle für jede Software-Zwischenschicht zu jeder Software-Zwischenschicht übergibt; und einen Akt von der mindestens einen Software-Zwischenschicht des Aktualisierens des zwischengespeicherten Zustands der Peripherieeinrichtung, wenn mindestens eine der Software-Zwischenschichten einen zwischengespeicherten Zustand ändert.

27. Verfahren gemäß Anspruch 21, des Weiteren umfassend:

einen Akt des Erfassens, dass ein oder mehrere Verbindungen, die bei ein oder mehreren korrespondierenden Peripherieeinrichtungen verarbeitet werden, ausgefallen sind, wobei die ein oder mehreren ausgefallenen Peripherieeinrichtungen über Prozessorsteuerung der ein oder mehreren kurzlebigen Netzwerkverbindungen verfügen; und einen Akt des Erfassens von anderen ein oder mehreren Peripherieeinrichtungen, die eingerichtet sind, um eine Verarbeitungssteuerung der ein oder mehreren Verbindungen durch Empfangen der zwei oder mehreren kurzlebigen Netzwerkverbindungen zu bearbeiten.

28. Verfahren gemäß Anspruch 27, des Weiteren ein Übergeben an die Quellkomponente, der Ablade-Datenstruktur und Verarbeitungskontrolle der zwei oder mehreren Zustandsobjekte von den ein oder mehreren ausgefallenen Peripherieeinrichtungen umfassend, wodurch Verarbeitungssteuerung der ein oder mehreren Verbindungen von den ein oder mehreren ausgefallenen Peripherieeinrichtungen zu der Quellkomponente hochgeladen wird.

29. Verfahren gemäß Anspruch 28, des Weiteren umfassend: einen Akt des Erfassens (930) einer Verarbeitungsressource der ein oder mehreren unterschiedlichen Peripherieeinrichtungen; und Einstellen der ein oder mehreren Zustandsobjekte, die von den ein oder mehreren ausgefallenen Peripherieeinrichtungen hochgeladen wurden, um die erfasste Ressource der anderen ein oder mehreren Peripherieeinrichtungen abzugleichen, so dass die ein oder mehreren Verbindungen bei anderen ein oder mehreren Peripherieeinrichtungen anstatt bei den ausgefallenen ein oder mehreren Peripherieeinrichtungen verarbeitet werden können.

30. Verfahren gemäß Anspruch 29, wobei die ein oder mehreren Verbindungen aggregierte 802.3ad-Verbindungen sind.

31. Verfahren gemäß Anspruch 27, des Weiteren umfassend:

einen Akt des Erfassens (930) einer Verarbeitungsressource der anderen ein oder mehreren Peripherieeinrichtungen; wenn eines der ein oder mehreren abgeladenen Zustandsobjekte durch die andere ein oder mehrere Peripherieeinrichtungen basierend auf der erfassten Verarbeitungsressource verarbeitet werden können, Übergeben (940) einer Verarbeitungssteuerung der ein oder mehreren abgeladenen Zustandsobjekte an die anderen ein oder mehreren Peripherieeinrichtungen; und wenn die ein oder mehreren abgeladenen Zustandsobjekte nicht durch die andere ein oder mehreren Peripherieeinrichtungen basierend auf der erfassten Verarbeitungsressource verarbeitet werden können, Übergeben einer Verarbeitungssteuerung der ein oder mehreren abgeladenen Zustandsobjekte an den Netzwerkprotokoll-Stapel.

32. Verfahren gemäß Anspruch 31, wobei die ein oder mehreren Verbindungen aggregierte 802.3ad-Verbindungen sind.

33. Verfahren gemäß Anspruch 1, für das Übertragen einer Vielzahl von abgeladenen Zustandsobjekten von ein oder mehreren Peripherieeinrichtungen (104, 270), die bezüglich einer anderen Peripherieeinrichtung ausgefallen sind, während die Integrität der etablierten Netzwerkkommunikation aufrecht erhalten wird, wobei das EDV-System des Weiteren eine zentrale Verarbeitungseinheit, CPU, (1120) und eine Vielzahl von Peripherieeinrichtungen (1170) umfasst, das Verfahren des Weiteren umfassend:

einen Akt des Erfassens, dass ein oder mehrere Verbindungen, die bei den ein oder mehreren Peripherieeinrichtungen verarbeitet werden, ausgefallen sind, wobei die ein oder mehreren ausgefallenen Peripherieeinrichtungen über Verarbeitungskontrolle der ein oder mehreren Zustandsobjekte verfügt;
einen Akt des Erfassens von anderen ein oder mehreren Peripherieeinrichtungen, die eingerichtet sind, um Verarbeitungskontrolle von nur den ein oder mehreren Verbindungen zu bearbeiten;
einen Akt des Erfassens von anderen ein oder mehreren Peripherieeinrichtungen, die eingerichtet sind, um Verarbeitungssteuerung der ein oder mehreren Verbindungen und ein oder mehrere Zustandsobjekte zu empfangen;
einen Akt des Erfassens (930) einer Verarbeitungsressource von einer der anderen ein oder mehreren Peripherieeinrichtungen; und
einen Akt des Übergebens (940) von Verarbeitungssteuerung an die ein oder mehreren erfassten anderen ein oder mehreren Peripherieeinrichtungen.

34. Verfahren gemäß Anspruch 33, des Weiteren umfassend:

wenn die anderen ein oder mehreren Peripherieeinrichtungen eingerichtet sind, um Verarbeitungssteuerung der nur ein oder einen mehreren Verbindungen basierend auf der erfassten Verarbeitungsressource zu bearbeiten, einen Akt des Übergebens (940) der Verarbeitungssteuerung für nur die ein oder mehreren Verbindungen zu den anderen ein oder mehreren Peripherieeinrichtungen;
wenn die anderen ein oder mehreren Peripherieeinrichtungen eingerichtet sind, um Verarbeitungssteuerung der ein oder mehreren Verbindungen und ein oder mehreren Zustandsobjekte basierend auf der erfassten Verarbeitungsressource zu bearbeiten, einen Akt des Übergebens der Verarbeitungssteuerung der ein oder mehreren Verbindungen und der ein oder mehreren abgeladenen Zustandsobjekte zu den anderen ein oder mehreren Peripherieeinrichtungen; und
einen Akt des Übergebens der Verarbeitungssteuerung für eine verbleibende der ein oder mehreren Verbindungen und eines verbleibenden der ein oder mehreren abgeladenen Zustandsobjekte an die CPU.

35. Verfahren gemäß Anspruch 34, wobei ein oder mehrere der abgeladenen Zustandsobjekte mindestens eine zwischengespeicherte Zustandsvariable umfassen.

36. Verfahren gemäß Anspruch 34, wobei ein oder mehrere Verbindungen aggregierte 802.3ad-Verbindungen sind.

37. Verfahren gemäß Anspruch 34, des Weiteren umfassend, vor dem Akt des Übergebens der Verarbeitungssteuerung der ein oder mehreren Verbindungen und der ein oder mehreren abgeladenen Zustandsobjekte, Einfügen eines Zwischentreibers neben einer Datenstruktur, umfassend die abgeladenen Zustandsobjekte, wobei der Zwischentreiber eingerichtet ist, um mindestens eines von multiplexen von ein oder mehreren VLAN-Tags, den Multiplexen von ein oder mehreren VLAN-Tags, Leiten von Netzwerkzustandsobjektverkehr über ein oder mehrere Peripherieeinrichtungen, und Sichern von Datenpaketen unter Verwendung eines IPSEC-Protokolls auszuführen.

38. Verfahren gemäß Anspruch 1, wobei das EDV-System eine Host-VerarbeitungsEinrichtung (1120) und ein oder mehrere Peripherieeinrichtungen (1170) umfasst, und wobei mindestens einige der Software-Zwischenschichten über ein Zustandsobjekt verfügt, wobei das Verfahren zum Einfügen eines Zwischentreibers, der ein virtueller Peripherieeinrichtungstreiber ist, um während eines Netzwerkverbindungsablade- und/oder Hochladevorgangs ein virtuelles Local Area Netzwerk besser zu ermöglichen, das Verfahren umfassend:

einen Vorgang des Einfügens (1030) von ein oder mehreren Zwischentreiber-Datenstrukturen innerhalb der Ablade-Datenstruktur;
und wobei der Akt des Übergebens ein Übergeben von der Quellkomponenteeinrichtung an die ein oder mehreren Peripherieeinrichtungen (104, 270) der zwei oder mehreren Zustandsobjekte umfasst.

39. Verfahren gemäß Anspruch 38, wobei ein Ausfallsicherungsereigniss auftritt und ein Zwischentreiber der mindestens einen oder mehreren Zwischentreiber-Datenstrukturen entspricht, ein Verfahren ausführt, das umfasst:

einen Akt des Erfassen, dass ein oder mehrere Verbindungen die bei ein oder mehreren Peripherieeinrichtungen verarbeitet werden, ausgefallen sind, wobei die in oder mehreren Peripherieeinrichtungen über Verarbeitungssteuerung der ein oder mehreren Datenobjekte verfügen;
einen Akt des Erfassens von anderen ein oder mehreren Peripherieeinrichtungen, die eingerichtet sind, um Verarbeitungssteuerung von nur den einen oder mehreren Verbindungen zu bearbeiten;
ein Vorgang den Akt des Erfassens von ein oder mehreren anderen Peripherieeinrichtungen, die eingerichtet sind, um Verarbeitungssteuerung von ein oder mehreren Verbindungen und ein oder mehreren Zustandsobjekten zu empfangen; und

einen Akt des Erfassens (930) einer Verarbeitungsressource von einer der erfassten ein oder mehreren Peripherieeinrichtungen.

40. Verfahren gemäß Anspruch 38, wobei die ein oder mehreren Zwischentreiber-Datenstrukturen in die Ablade-Datenstruktur vor dem Abladen der Verarbeitungssteuerung der Ablade-Datenstruktur an die ein oder mehreren Peripherieeinrichtungen eingefügt werden.

41. Verfahren gemäß Anspruch 38, wobei die ein oder mehreren Zwischentreiber-Datenstrukturen an den Punkt des Auslösens einer Ablade-Anforderung der Ablade-Datenstruktur an die ein oder mehreren Peripherieeinrichtungen eingeführt werden.

42. Verfahren gemäß Anspruch 41, wobei mindestens eine der ein oder mehreren Zwischentreiber-Instruktionen zum Ausführen eines Akts des Richtens eines Unterdatenpakets an eine VLAN-Adresse basierend auf einen virtuellen LAN-Tag umfasst, der mit den Unterdatenpaket verknüpft ist, wobei die Instruktionen des Weiteren eines Umfassen von:

einen Akt des Empfangens eines gemultiplexten Datenpaketes;
einen Akt des Demultiplexen des Datenpakets in ein oder mehrere Unterdatenpakete;
einen Akt des Multiplexens eines Datenpaketes; und
einen Akt des Sendens eines gemultiplexten Datenpaketes.

43. Verfahren gemäß Anspruch 38, wobei die Ablade-Datenstruktur mit zwei oder mehreren Zustandsobjekten korrespondiert, die der gleichen Software-Zwischenschicht entsprechen, und wobei die zwei oder mehreren Zustandsobjekte auf ein einzelnes Zustandsobjekt in einer unteren Softwareschicht eines Netzwerkprotokoll-Stapels zeigen, wobei die Ablade-Datenstruktur das Erscheinungsbild eines invertierten Baumes hat.

44. Verfahren gemäß Anspruch 43, des Weiteren einen Akt des Übergebens einer Verarbeitungssteuerung der gesamten invertierten Baum-Ablade-Datenstruktur an ein oder mehrere der ein oder mehreren Peripherieeinrichtungen umfassend.

45. Verfahren gemäß Anspruch 44, des Weiteren einen Akt des Übergebens der Verarbeitungssteuerung der ein oder mehrere der Zustandsobjekte der invertierten Baum-Ablade-Datenstruktur von der zumindest einen der ein oder mehreren Peripherieeinrichtungen an den Host-Protokoll-Stapel umfassend.

46. Verfahren gemäß Anspruch 45, wobei der Akte des Übergebens von der Quellkomponenteneinrichtung an ein oder mehrere Peripherieeinrichtungen der zwei oder mehreren Zustandsobjekte auftritt in Erwiderung auf einen Akt des Erfassens, das mindestens eine der ein oder mehrere Peripherieeinrichtungen ausgefallen sind.

47. Verfahren gemäß Anspruch 46, wobei ein Zwischentreiber der mindestens einen der ein oder mehreren Zwischentreiber-Datenstrukturen entspricht, ein Verfahren ausführt, das umfasst:

ein Akt des Erfassens, das ein oder mehrere Verbindungen bei ein oder mehreren Peripherieeinrichtungen ausgeführt werden, ausgefallen sind, die ein oder mehreren Peripherieeinrichtungen verfügen über Verarbeitungssteuerung der ein oder mehreren Zustandsobjekte;
einen Akt des Erfassens von anderen ein oder mehreren Peripherieeinrichtungen, die eingerichtet sind, um Verarbeitungssteuerung von nur der ein oder mehreren Verbindungen zu bearbeiten;
einen Akt des Erfassens von anderen ein oder mehreren Peripherieeinrichtungen, die eingerichtet, um Verarbeitungssteuerung der ein oder mehreren Verbindungen und ein oder mehreren Zustandsobjekten zu empfangen; und
einen Akt des Erfassens einer Verarbeitungsressource von einer der erfassten ein oder mehreren Peripherieeinrichtungen;
wenn die anderen ein oder mehreren Peripherieeinrichtungen eingerichtet sind, um Verarbeitungssteuerung von nur der ein oder mehreren Verbindungen basierend auf der erfassten Verarbeitungsressource zu bearbeiten, einen Akt des Übergebens der Verarbeitungssteuerung von nur den ein oder mehreren Verbindungen an die anderen ein oder mehreren Peripherieeinrichtungen;
wenn die anderen ein oder mehreren Peripherieeinrichtungen eingerichtet sind, um Verarbeitungssteuerung der ein oder mehreren Verbindungen und ein oder mehreren Zustandsobjekte basierend auf der erfassten Verarbeitungsressource zu bearbeiten, einen Akt des Übergebens von Verarbeitungssteuerung der ein oder mehreren Verbindungen und ein oder mehreren abgeladenen Zustandsobjekte an die anderen ein oder mehreren Peripherieeinrichtungen; und

einen Akt des Übergebens von Verarbeitungssteuerung an eine verbleibende der ein oder mehrere Verbindungen und an eines der verbleibenden der einen oder mehreren abgeladenen Zustandsobjekte des Host-Protokoll-Stapels.

48. Computerprogrammprodukt zur Verwendung in einem EDV-System umfassend einen Switch (108, 206, 306), und einen Netzwerk-Protokoll-Stapel (102, 220) umfassend eine Reihe von ein oder mehreren Software-Zwischenschichten (102, 201-203), wobei jede der Software-Zwischenschichten ein Zustandsobjekt aufweist, wobei der Switch oberhalb der oder integriert in der obersten Soffinrare-Zwischenschicht ist, wobei das Computerprogrammprodukt eingerichtet ist, ein Verfahren für eine Steuerungsübergabe zwischen ein oder mehreren Zielkomponenteneinrichtungen und ein oder mehreren Quellkomponenteneinrichtungen zu implementieren, wobei die Steuerung nötig ist, um eine Vielzahl von Zustandsobjekten zu verarbeiten, während die Integrität von etablierten Netzwerkkommunikationen aufrecht erhalten wird, wobei das Computerprogrammprodukt ein oder mehrere computerlesbare Medien umfasst, die computerausführbare Instruktionen gespeichert haben, die, wenn diese durch ein oder mehrere Prozessoren in den Host-Computersystem ausgeführt werden, veranlassen, dass das Host-Computersystem ein Verfahren ausführt, wobei das Verfahren die folgenden Schritte umfasst:

einen Akt des Erzeugens (810) einer hierarchischen Ablade-Datenstruktur, die eine Vielzahl von Zustandsobjekten von ein oder mehreren Software-Zwischenschichten umfasst, wobei jede der ein oder mehreren Software-Zwischenschichten einer Ebene der hierarchischen Ablade-Datenstruktur entspricht;

einen Akt des Übergebens (830) von einer Quellkomponenteneinrichtung zu einer Zielkomponenteneinrichtung von zwei oder mehreren Zustandsobjekten in der gleichen Software-Zwischenschicht der Ablade-Datenstruktur; und

einen Akt des Verarbeitens (840), durch die Zielkomponente, der zwei oder mehreren Zustandsobjekten in der gleichen Protokollschicht nach dem Übergeben;

wobei die Ablade-Datenstruktur eine Blockliste umfasst, die mindestens einen Nächster-Block-Zeiger (547, 560, 562, 570, 572) aufweist, der auf die gleiche Software-Zwischenschicht eines anderen Verbindungspfades durch den Netzwerkprotokoll-Stapel zeigt, und einen Abhängiger-Block-Zeiger (537, 542, 557) aufweist, der auf eine andere hierarchische Schicht des gleichen Verbindungspfades durch den Netzwerkprotokoll-Stapel zeigt.

49. Computerprogrammprodukt gemäß Anspruch 48, wobei die computerausführbaren Instruktionen, wenn diese von den ein oder mehreren Prozessoren ausgeführt werden, des Weiteren das EDV-System veranlassen, die folgenden Schritte auszuführen:

ein Akt des Erzeugens eines Handle für jede Schicht der Software-Zwischenschichten, wobei die Zielkomponente ein NIC (104, 270, 1170) ist, und das NIC das Handle für jede Software-Zwischenschicht zu jeder Software-Zwischenschicht übergibt; und

einen Akt des Aktualisierens des zwischengespeicherten Zustands des NIC durch mindestens ein der Software-Zwischenschichten, wenn mindestens eine der Software-Zwischenschichten den zwischengespeicherten Zustand ändert.

50. Computerprogrammprodukt gemäß Anspruch 48, wobei die computerausführbaren Instruktionen, wenn diese von den einen oder mehreren Prozessoren ausgeführt werden, das EDV-System veranlassen, die folgenden Schritte auszuführen:

einen Akt des Erfassens, dass ein oder mehrere Verbindungen, die bei ein oder mehreren entsprechenden Peripherieeinrichtungen verarbeitet werden, ausgefallen sind, wobei die ein oder mehreren ausgefallenen Peripherieeinrichtungen über Verarbeitungssteuerung der ein oder mehreren Ablade-Datenstrukturen und ein oder mehreren Zustandsobjekten verfügen; und

einen Akt des Erfassens von anderen ein oder mehreren Peripherieeinrichtungen, die eingerichtet sind, um Verarbeitungssteuerung der einen oder mehreren Verbindungen zu bearbeiten, durch Empfangen der einen oder mehreren Ablade-Datenstrukturen und Steuerung der einen oder mehreren Zustandsobjekte.

51. Computerprogrammprodukt gemäß Anspruch 50, wobei die computerausführbaren Instruktionen, wenn diese von den einen oder mehreren Prozessoren ausgeführt werden, des Weiteren das EDV-System veranlassen, die folgenden Schritte auszuführen:

einen Akt des Erfassens (930) einer Verarbeitungsressource der anderen einen oder mehreren Peripherieeinrichtungen;

wenn eines der einen oder mehreren abgeladenen Zustandsobjekten durch die anderen eine oder mehreren Peripherieeinrichtungen basierend auf der erfassten Verarbeitungsressource verarbeitet werden kann, Übergeben (940) der Verarbeitungssteuerung der einen oder mehreren abgeladenen Zustandsobjekten an die anderen ein oder mehreren Peripherieeinrichtungen; und

wenn die ein oder mehreren abgeladenen Zustandsobjekte nicht durch die anderen ein oder mehreren Peripherieeinrichtungen basierend auf der erfassten Verarbeitungsressource verarbeitet werden können, Übergeben von Verarbeitungssteuerung der ein oder mehreren abgeladenen Zustandsobjekte an den Host-Protokoll-Stapel.

## Revendications

1. Procédé de transfert de commande entre un ou plusieurs dispositif(s) d'élément(s) destinataire(s) et un ou plusieurs dispositif(s) d'élément(s) de source dans un système informatisé comprenant un commutateur (108, 206, 306), et une pile de protocoles de réseau (102, 220) comprenant une séquence d'une ou plusieurs couche(s) logicielle(s) intermédiaire(s) (106, 201 à 203), chacune desdites couches comprenant un état d'objet, le commutateur étant situé au-dessus de la couche logicielle intermédiaire supérieure ou intégré dans celle-ci, la commande ayant besoin de traiter une pluralité d'objets d'état tout en conservant toutefois l'intégrité des communications de réseau établies, le procédé comprenant :

une étape de génération (810) d'une structure hiérarchique de données de décharge comprenant une pluralité d'objets d'état d'une ou plusieurs couche(s) logicielle(s) intermédiaire(s), dans lequel chacune desdites couches logicielles intermédiaires correspond à un niveau de la structure hiérarchique de données de décharge ;

une étape de transfert (830), d'un dispositif d'élément de source à un dispositif d'élément de destination, de deux objets d'état ou plus dans la même couche logicielle intermédiaire de la structure de données de décharge ; et

une étape de traitement, par l'élément de destination (840), des deux objets d'état ou plus au niveau de la même couche de protocole après le transfert ;

dans lequel la structure de données de décharge comprend une liste de blocs comprenant au moins un pointeur de bloc suivant (547, 560, 562, 570, 572) indiquant la même couche logicielle intermédiaire d'un chemin de connexion différent par l'intermédiaire de la pile de protocoles de réseau, et un pointeur de bloc dépendant (537, 542, 557) indiquant une couche hiérarchique différente du même chemin de connexion par l'intermédiaire de la pile de protocoles de réseau.

2. Procédé conformément à la revendication 1, dans lequel l'élément de destination ou l'élément de source est un dispositif périphérique (104, 270).

3. Procédé conformément à la revendication 2, dans lequel au moins l'un des deux objets d'état ou plus comprend une variable d'état en mémoire cache.

4. Procédé conformément à la revendication 2, dans lequel l'étape de transfert est exécutée au cours de la phase de démarrage lent d'une connexion TCP.

5. Procédé conformément à la revendication 2 comprenant en outre une étape d'insertion (1030) d'une structure de données de pilote intermédiaire dans la structure de données de décharge, le pilote intermédiaire étant conçu pour décrypter et encapsuler des paquets de données entrants et sortants, les paquets de données sortants comprenant un ou plusieurs identifiants de réseau local virtuel (VLAN), et des paquets entrants étant dépourvus d'un ou plusieurs identifiants de réseau local virtuel.

6. Procédé conformément à la revendication 5, dans lequel le pilote intermédiaire est conçu pour sécuriser le trafic de réseau sur une ou plusieurs liaisons de réseau à l'aide d'un protocole IPSEC (association de sécurité) par la mise en oeuvre de l'ajout d'un en-tête d'authentification dans un paquet de données et/ou du retrait d'un en-tête d'authentification de ce dernier, et le chiffrement et le déchiffrement du paquet de données.

7. Procédé conformément à la revendication 2 comprenant en outre :

une étape de génération, par le dispositif périphérique, d'un ou plusieurs descripteur(s) pour une ou plusieurs couche(s) logicielle(s) intermédiaire(s), dans lequel le dispositif périphérique transfère le ou les descripteur(s) à une ou plusieurs couche(s) de piles de protocoles hôtes correspondantes ; et
une étape de mise à jour de l'état en mémoire cache du dispositif périphérique, par la ou les couche(s) logicielle (s) intermédiaire(s), si au moins l'une des couches logicielles intermédiaires change d'état en mémoire cache.

8. Procédé conformément à la revendication 2, dans lequel survient un événement de basculement, comprenant en outre :

une étape de détection qu'une ou plusieurs liaison(s) traitée(s) au niveau d'un ou plusieurs dispositif(s) périphérique(s) correspondant(s) a/ont échoué, le ou les dispositif(s) périphérique(s) ayant échoué s'étant vu attribuer la commande de processeur d'une ou plusieurs structure(s) de données de décharge et d'un ou plusieurs objet(s) d'état ; et
une étape de détection d'un ou plusieurs dispositif(s) périphérique(s) différent(s) qui est/sont conçus pour gérer la commande de traitement de la ou des liaison(s) par la réception de la ou des structure(s) de données de décharge et de la commande du ou des objet(s) d'état.

9. Procédé conformément à la revendication 8 comprenant en outre le transfert à l'élément de source de la ou des structure(s) de données de décharge et de la commande de traitement du ou des objet(s) d'état à partir du ou des dispositif(s) périphérique(s) ayant échoué, ce qui permet de charger (920) la commande de traitement de la ou des liaison(s) du ou des dispositif(s) périphérique(s) ayant échoué à l'élément de source.

10. Procédé conformément à la revendication 9 comprenant en outre une étape de détection d'une ressource de traitement du ou des dispositif(s) périphérique(s) différent(s) ; et l'ajustement du ou des objet(s) d'état qui a/ont été chargé(s) à partir du ou des dispositif(s) périphérique(s) ayant échoué afin de le(s) faire correspondre à la ressource détectée du ou des dispositif(s) périphérique(s) différent(s), de sorte que la ou les liaison(s) puisse(nt) être traitée (s) au niveau du ou des dispositif(s) périphérique(s) différent(s) et non au niveau du ou des dispositif(s) périphérique (s) ayant échoué.

11. Procédé conformément à la revendication 10, dans lequel la ou les liaison(s) est/sont une/des liaison(s) 802.3ad agrégée(s).

12. Procédé conformément à la revendication 8 comprenant en outre :

une étape de détection (930) d'une ressource de traitement du ou des dispositif(s) périphérique(s) différent(s) ; si l'un desdits objets d'état déchargés peut être traité par le ou les dispositif(s) périphérique(s) différent(s) sur la base de la ressource de traitement détectée, le transfert (940) de la commande de traitement du ou des objet (s) d'état déchargé(s) audit dispositif périphérique différent ; et
si le ou les objet(s) d'état déchargé(s) ne peut/peuvent pas être traité(s) par le ou les dispositif(s) périphérique (s) différent(s) sur la base de la ressource de traitement détectée, le transfert de la commande de traitement du ou des objet(s) d'état déchargé(s) à la pile de protocoles de réseau.

13. Procédé conformément à la revendication 12, dans lequel la ou les liaison(s) est/sont une/des liaison(s) 802.3ad agrégée(s).

14. Procédé conformément à la revendication 1, dans lequel le système informatisé traite deux objets d'état ou plus correspondant à la même couche logicielle intermédiaire, et dans lequel le maintien de l'intégrité comprend la préservation de l'intégrité des communications de réseau conformément aux changements d'état, aux événement de basculement et aux balises VLAN.

15. Procédé conformément à la revendication 14 comprenant en outre une étape de mise à jour de l'élément de destination dans le cas d'un changement dans l'objet d'état, ou dans le cas d'un changement dans la structure de données de décharge.

16. Procédé conformément à la revendication 14, dans lequel l'élément de destination est un dispositif périphérique.

EP 1 515 511 B1

**17.** Procédé conformément à la revendication 16, dans lequel l'étape de mise à jour de l'élément de destination comprend :

une étape de génération, par le dispositif périphérique, d'un ou plusieurs descripteur(s) pour une ou plusieurs couche(s) logicielle(s) intermédiaire(s), dans lequel le dispositif périphérique transfère le ou les descripteur(s) à une ou plusieurs couche(s) de piles de protocoles hôtes correspondantes ; et
une étape de mise à jour de l'état en mémoire cache du dispositif périphérique, par la ou les couche(s) logicielle (s) intermédiaire(s), si au moins l'une des couches logicielles intermédiaires change d'état en mémoire cache.

**18.** Procédé conformément à la revendication 16 comprenant en outre une étape de préservation dynamique de l'intégrité des communications de réseau dans le cas d'un événement de basculement par le traitement d'une ou plusieurs liaison(s) de réseau agrégée(s) au niveau d'un ou plusieurs dispositif(s) périphérique(s) différent(s).

**19.** Procédé conformément à la revendication 18, dans lequel l'étape de préservation dynamique de l'intégrité des communications de réseau comprend :

une étape de détection qu'une ou plusieurs liaison(s) traitée(s) au niveau d'un ou plusieurs dispositif(s) périphérique(s) correspondant(s) a/ont échoué, le ou les dispositif(s) périphérique(s) ayant échoué s'étant vu attribuer la commande de processeur d'une ou plusieurs structure(s) de données de décharge et d'un ou plusieurs objet(s) d'état ;
une étape de détection d'un ou plusieurs dispositif(s) périphérique(s) différent(s) qui est/sont conçu(s) pour traiter la commande de traitement de la ou des liaison(s) par la réception de la ou des structure(s) de données de décharge et de la commande du ou des objet(s) d'état ; et
une étape de détection (940) d'une ressource de traitement du ou des dispositif(s) périphérique(s) différent(s) ;
si le ou les objet(s) d'état déchargé(s) peut/peuvent être traité(s) par le ou les dispositif(s) périphérique(s) différent(s) sur la base de la ressource de traitement détectée, le transfert (940) de la commande de traitement du ou des objet(s) d'état déchargé(s) audit dispositif périphérique différent ; et
si le ou les objet(s) d'état déchargé(s) ne peut/peuvent pas être traité(s) par le ou les dispositif(s) périphérique (s) différent(s) sur la base de la ressource de traitement détectée, le transfert de la commande de traitement du ou des objet(s) d'état déchargé(s) à la pile de protocoles de réseau.

**20.** Procédé conformément à la revendication 1, dans lequel la pluralité d'objets d'état est constituée d'une pluralité de connexions de réseau de courte durée, dans lequel l'étape de transfert comprend le transfert de deux connexions de réseau de courte durée ou plus dans la même couche logicielle intermédiaire de la structure de données de décharge, et dans lequel l'étape de traitement comprend le traitement des deux connexions de courte durée ou plus après le transfert.

**21.** Procédé conformément à la revendication 20, dans lequel l'élément de destination ou l'élément de source est un dispositif périphérique (104, 270).

**22.** Procédé conformément à la revendication 21, dans lequel un objet d'état comprend une variable d'état en mémoire cache, et une variable d'état constante et/ou une variable d'état déléguée.

**23.** Procédé conformément à la revendication 21, dans lequel l'étape de transfert des deux connexions de courte durée ou plus est exécutée au cours de la phase de démarrage lent d'une connexion TCP.

**24.** Procédé conformément à la revendication 21, comprenant en outre une étape d'insertion (1030) d'une structure de données de pilote intermédiaire dans la structure de données de décharge, le pilote intermédiaire étant conçu pour décrypter et encapsuler des paquets de données entrants et sortants, dans lequel les paquets de données sortants comprennent un ou plusieurs identifiant(s) de réseau local virtuel et des paquets entrants sont dépourvus d'un ou plusieurs identifiant(s) de réseau local virtuel.

**25.** Procédé conformément à la revendication 24, dans lequel le pilote intermédiaire est conçu pour sécuriser le trafic de réseau sur une ou plusieurs liaison(s) de réseau à l'aide d'un protocole IPSEC par la mise en oeuvre de l'ajout d'un en-tête d'authentification dans un paquet de données et/ou le retrait d'un en-tête d'authentification de ce dernier, et le chiffrement et le déchiffrement du paquet de données.

**26.** Procédé conformément à la revendication 21 comprenant en outre :

une étape de génération d'un descripteur pour chaque couche des couches logicielles intermédiaires, dans lequel le dispositif périphérique transfère le descripteur pour chaque couche logicielle intermédiaire à chaque couche logicielle intermédiaire ; et

une étape de mise à jour de l'état en mémoire cache du dispositif périphérique, par la ou les couche(s) logicielle (s) intermédiaire(s), si au moins l'une des couches logicielles intermédiaires change d'état en mémoire cache.

**27.** Procédé conformément à la revendication 21 comprenant en outre :

une étape de détection qu'une ou plusieurs liaison(s) traitée(s) au niveau d'un ou plusieurs dispositif(s) périphérique(s) correspondant(s) a/ont échoué, le ou les dispositif(s) périphérique(s) ayant échoué s'étant vu attribuer la commande de processeur des deux connexions de réseau de courte durée ou plus ; et

une étape de détection d'un ou plusieurs dispositif(s) périphérique(s) différent(s) qui est/sont conçu(s) pour traiter la commande de traitement de la ou des liaison(s) par la réception des deux connexions de réseau de courte durée ou plus.

**28.** Procédé conformément à la revendication 27 comprenant en outre le transfert vers l'élément de source de la structure de données de décharge et la commande de traitement des deux états d'objet ou plus à partir du ou des dispositif (s) périphérique(s) ayant échoué, ce qui permet de charger la commande de traitement de la ou des liaison(s) du ou des dispositif(s) périphérique(s) ayant échoué à l'élément de source.

**29.** Procédé conformément à la revendication 28 comprenant en outre une étape de détection (930) d'une ressource de traitement du ou des dispositif(s) périphérique(s) différent(s) ; et l'ajustement du ou des objet(s) d'état qui a/ont été chargé(s) à partir du ou des dispositif(s) périphérique(s) ayant échoué afin de les faire correspondre à la ressource détectée du ou des dispositif(s) périphérique(s) différent(s), de sorte que la ou les liaison(s) puisse(nt) être traitée (s) au niveau dudit dispositif périphérique différent et non au niveau dudit dispositif périphérique ayant échoué.

**30.** Procédé conformément à la revendication 29, dans lequel la ou les liaison(s) est/sont une/des liaison(s) 802.3ad agrégée(s).

**31.** Procédé conformément à la revendication 27 comprenant en outre :

une étape de détection (930) d'une ressource de traitement du ou des dispositif(s) périphérique(s) différent(s) ; si l'un du ou des objet(s) d'état déchargé(s) peut être traité par le ou les dispositif(s) périphérique(s) différent (s) sur la base de la ressource de traitement détectée, le transfert (940) de la commande de traitement du ou des objet(s) d'état déchargé(s) audit dispositif périphérique différent ; et

si le ou les objet(s) d'état déchargé(s) ne peut/peuvent pas être traité(s) par le ou les dispositif(s) périphérique (s) différent(s) sur la base de la ressource de traitement détectée, le transfert de la commande de traitement du ou des objet(s) d'état déchargé(s) à la pile de protocoles de réseau.

**32.** Procédé conformément à la revendication 31, dans lequel la ou les liaison(s) est/sont une/des liaison(s) 802.3ad agrégée(s).

**33.** Procédé conformément à la revendication 1 destiné à transférer une pluralité d'objets d'état déchargés du ou des dispositif(s) périphérique(s) (104, 270) qui a/ont échoué à un autre dispositif périphérique, tout en conservant toutefois l'intégrité de la communication de réseau établie, dans lequel le système informatisé comprend en outre une unité centrale de traitement (1120), et une pluralité de dispositifs périphériques (1170), le procédé comprenant en outre :

une étape de détection qu'une ou plusieurs liaison(s) traitée(s) au niveau d'un ou plusieurs dispositif(s) périphérique(s) a/ont échoué, le ou les dispositif(s) périphérique(s) ayant échoué s'étant vu attribuer la commande de traitement d'un ou plusieurs objet(s) d'état ;

une étape de détection d'un ou plusieurs dispositif(s) périphérique(s) différent(s) qui est/sont conçu(s) pour traiter la commande de traitement de la ou des liaison(s) uniquement ;

une étape de détection d'un ou plusieurs dispositif(s) périphérique(s) différent(s) qui est/sont conçu(s) pour recevoir une commande de traitement de la ou des liaison(s) et du ou des objet(s) d'état ;

une étape de détection (930) d'une ressource de traitement de l'un quelconque desdits dispositifs périphériques différents détectés ; et

une étape de transfert (940) de la commande de traitement audit dispositif périphérique différent détecté.

**34.** Procédé conformément à la revendication 33 comprenant en outre :

si le ou les dispositif(s) périphérique(s) différent(s) est/sont conçu(s) pour gérer la commande de traitement de la ou des liaison(s) uniquement, sur la base de la ressource de traitement détectée, une étape de transfert (940) de la commande de traitement de la ou des liaison(s) uniquement audit dispositif périphérique différent ;
si le ou les dispositif(s) périphérique(s) différent(s) est/sont conçu(s) pour gérer la commande de traitement d'une ou plusieurs liaison(s) et d'un ou plusieurs objet(s) d'état sur la base de la ressource de traitement détectée, une étape de transfert de la commande de traitement de la ou des liaison(s) et du ou des objet(s) d'état déchargé(s) audit dispositif périphérique différent ; et
une étape de transfert de la commande de traitement de l'une quelconque desdites liaisons restantes et de l'un quelconque desdits objets d'état déchargés restants à l'unité centrale de traitement.

**35.** Procédé conformément à la revendication 34, dans lequel le ou les objet(s) d'état déchargé(s) comprend/comprennent au moins une variable d'état en mémoire cache.

**36.** Procédé conformément à la revendication 34, dans lequel la ou les liaison(s) est/sont une/des liaison(s) 802.3ad agrégée(s).

**37.** Procédé conformément à la revendication 34 comprenant en outre, avant l'étape de transfert de la commande de traitement de la ou des liaison(s) et du ou des objet(s) d'état déchargé(s), l'insertion d'un pilote intermédiaire adjacent à une structure de données comprenant les objets d'état déchargés, le pilote intermédiaire étant capable d'exécuter le multiplexage d'une ou plusieurs balise(s) VLAN, et/ou le démultiplexage d'une ou plusieurs balise(s) VLAN, et/ou l'orientation du trafic d'objet d'état de réseau sur un ou plusieurs dispositif(s) périphérique(s), et/ou la sécurisation de paquets de données de réseau à l'aide d'un protocole IPSEC.

**38.** Procédé conformément à la revendication 1, dans lequel le système informatisé comprend une unité de traitement hôte (1120), et un ou plusieurs dispositif(s) périphérique(s) (1170), dans lequel au moins certaines des couches logicielles intermédiaires comprennent un objet d'état, le procédé pour insérer un pilote intermédiaire étant un pilote de dispositif périphérique virtuel afin de faciliter davantage, pendant un procédé de décharge et/ou de charge de connexion de réseau, un réseau local virtuel, le procédé comprenant :

une étape d'insertion (1030) d'une ou plusieurs structure(s) de données de pilote intermédiaire dans la structure de données de décharge ; et dans lequel l'étape de transfert comprend le transfert, du dispositif d'élément de source à un ou plusieurs dispositifs périphériques (104, 270), des deux objets d'état ou plus.

**39.** Procédé conformément à la revendication 38, dans lequel lorsque survient un événement de basculement, un pilote intermédiaire correspondant à au moins l'une desdites structures de données de pilote intermédiaire exécute un procédé comprenant :

une étape de détection que la ou les liaison(s) traitée(s) au niveau d'un ou plusieurs dispositif(s) périphérique (s) a/ont échoué, le ou les dispositif(s) périphérique(s) s'étant vu attribuer la commande de traitement d'un ou plusieurs objet(s) d'état ;
une étape de détection d'un ou plusieurs périphérique(s) différent(s) qui est/sont conçu(s) pour gérer la commande de traitement de la ou des liaison(s) uniquement ;
une étape de détection d'un ou plusieurs dispositif(s) périphérique(s) différent(s) qui est/sont conçu(s) pour recevoir la commande de traitement de la ou des liaison(s) et d'un ou plusieurs objet(s) d'état ; et
une étape de détection (930) d'une ressource de traitement de l'un quelconque desdits dispositifs périphérique détectés.

**40.** Procédé conformément à la revendication 38, dans lequel la ou les structure(s) de données de pilote intermédiaire est/sont insérée(s) dans la structure de données décharge avant la décharge de la commande de traitement de la structure de données de décharge vers le ou les dispositif(s) périphérique(s).

**41.** Procédé conformément à la revendication 38, dans lequel la ou les structure(s) de données de pilote intermédiaire est/sont insérée(s) au point d'initiation d'une requête de décharge de la structure de données de décharge vers le ou les dispositif(s) périphérique(s).

**42.** Procédé conformément à la revendication 41, dans lequel au moins l'un desdits pilotes intermédiaires comprend des instructions pour la mise en oeuvre d'une étape d'orientation d'un paquet de sous-données vers une adresse VLAN sur la base d'une balise LAN virtuelle associée au paquet de sous-données, les instructions comprenant en outre :

une étape de réception d'un paquet de données multiplexé ;
et/ou une étape de démultiplexage du paquet de données en un ou plusieurs paquet(s) de sous-données ;
et/ou une étape de multiplexage d'un paquet de sous-données ;
et/ou une étape d'envoi d'un paquet de données multiplexé

43. Procédé conformément à la revendication 38, dans lequel la structure de données de décharge correspond à deux objets d'état ou plus correspondant à la même couche logicielle intermédiaire, et dans lequel les deux objets d'état ou plus indiquent un objet d'état unique au niveau d'une couche logicielle inférieure d'une pile de protocoles de réseau, dans lequel la structure de données de décharge a l'apparence d'un arbre inversé.

44. Procédé conformément à la revendication 43 comprenant en outre une étape de transfert de la commande de traitement de toute la structure de données de décharge d'arbre inversé à un ou plusieurs desdits dispositifs périphériques.

45. Procédé conformément à la revendication 44 comprenant en outre une étape de transfert de la commande de traitement d'un ou plusieurs des objets d'état de la structure de données de décharge d'arbre inversé d'au moins l'un desdits dispositifs périphériques à la pile de protocoles hôte.

46. Procédé conformément à la revendication 45, dans lequel l'étape de transfert des deux objets d'état ou plus, du dispositif d'élément de source à un ou plusieurs dispositif(s) périphérique(s), se produit en réponse à une étape de détection qu'au moins l'un desdits dispositifs périphériques a échoué.

47. Procédé conformément à la revendication 46, dans lequel un pilote intermédiaire qui correspond à au moins l'une des structures de données de pilote intermédiaire exécute le procédé comprenant:

une étape de détection qu'une ou plusieurs liaison(s) traitée(s) au niveau d'un ou plusieurs dispositif(s) périphérique(s) a/ont échoué, le ou les dispositif(s) périphérique(s) s'étant vu attribuer la commande de traitement d'un ou plusieurs objet(s) d'état ;
une étape de détection d'un ou plusieurs dispositif(s) périphérique(s) différent(s) qui est/sont conçu(s) pour gérer la commande de traitement de la ou des liaison(s) uniquement ;
une étape de détection d'un ou plusieurs dispositif(s) périphérique(s) différent(s) qui est/sont conçu(s) pour recevoir la commande de traitement de la ou des liaison(s) et d'un ou plusieurs objet(s) d'état ; et
une étape de détection d'une ressource de traitement de l'un quelconque desdits dispositifs périphériques détectés ;
si le ou les dispositif(s) périphérique(s) différent(s) est/sont conçu(s) pour gérer la commande de traitement de la ou des liaison(s) uniquement, sur la base de la ressource de traitement détectée, une étape de transfert de la commande de traitement de la ou des liaison(s) uniquement audit dispositif périphérique différent ;
si le ou les dispositif(s) périphérique(s) différent(s) est/sont conçu(s) pour gérer la commande de traitement d'une ou plusieurs liaison(s) et d'un ou plusieurs objet(s) d'état sur la base de la ressource de traitement détectée, une étape de transfert de la commande de traitement de la ou des liaison(s) et du ou des objet(s) d'état déchargé(s) audit dispositif périphérique différent ; et
une étape de transfert de la commande de traitement d'une liaison quelconque parmi lesdites liaisons restantes et d'un objet d'état déchargé quelconque parmi lesdits objets d'état déchargés à la pile de protocoles de réseau.

48. Produit-programme informatique à utiliser dans un système informatisé comprenant un commutateur (108, 206, 306), et une pile de protocoles de réseau (102, 220) comprenant une séquence d'une ou plusieurs couche(s) logicielle(s) intermédiaire(s) (106, 201 à 203), chacune des couches logicielles intermédiaires comprenant un objet d'état, le commutateur étant situé au-dessus de la couche logicielle intermédiaire supérieure ou intégré dans celle-ci, le produit-programme informatique pour mettre en oeuvre un procédé de transfert de commande entre un ou plusieurs dispositif(s) d'élément(s) de destination et un ou plusieurs dispositif(s) d'élément(s) de source, la commande ayant besoin de traiter une pluralité d'objets d'état tout en conservant toutefois l'intégrité des communications de réseau établies, le produit-programme informatique comprenant un ou plusieurs support(s) lisible(s) par ordinateur comprenant des instructions exécutables par ordinateur, lesquelles, lorsqu'elles sont exécutées par un ou plusieurs processeur(s) au niveau du système informatique hôte, amènent le système informatique hôte à exécuter le procédé, le procédé comprenant :

une étape de génération (810) d'une structure hiérarchique de données de décharge comprenant une pluralité d'objets d'état d'une ou plusieurs couche(s) logicielle(s) intermédiaire(s), dans lequel chacune desdites couches logicielles intermédiaires correspond à un niveau de la structure hiérarchique de données de décharge ;

une étape de transfert (830), d'un dispositif d'élément de source à un dispositif d'élément de destination, de deux objets d'état ou plus dans la même couche logicielle intermédiaire de la structure de données de décharge ; et

une étape de traitement, par l'élément de destination (840), des deux objets d'état ou plus au niveau de la même couche de protocole après le transfert ;

dans lequel la structure de données de décharge comprend une liste de blocs comprenant au moins un pointeur de bloc suivant (574, 560, 562, 570, 572) qui indique la même couche logicielle intermédiaire d'un chemin de connexion différent par l'intermédiaire de la pile de protocoles de réseau, et un pointeur de bloc dépendant (537, 542, 557) qui pointe vers une couche hiérarchique différente du même chemin de connexion par l'intermédiaire de la pile de protocoles de réseau.

**49.** Produit-programme informatique conformément à la revendication 48, dans lequel les instructions exécutables par ordinateur, lorsqu'elles sont exécutées par le ou les processeurs, amènent en outre le système informatique à exécuter :

une étape de génération d'un descripteur pour chaque couche des couche(s) logicielle(s) intermédiaire(s), dans lequel l'élément de destination est une carte réseau (NIC) (104, 270, 1170) et la NIC transfère le descripteur pour chaque couche logicielle intermédiaire à chaque couche logicielle intermédiaire et ;

une étape de mise à jour de l'état en mémoire cache de la NIC, par la ou les couche(s) logicielle(s) intermédiaire (s), si au moins l'une des couches logicielles intermédiaires change d'état en mémoire cache.

**50.** Produit-programme informatique conformément à la revendication 48, dans lequel les instructions exécutables par ordinateur, lorsqu'elles sont exécutées par le ou les processeur(s), amènent en outre le système informatisé à exécuter :

une étape de détection qu'une ou plusieurs liaison(s) traitée(s) au niveau d'un ou plusieurs dispositif(s) périphérique(s) correspondant(s) a/ont échoué, le ou les dispositif(s) périphérique(s) ayant échoué s'étant vu attribuer la commande de processeur d'une ou plusieurs structure(s) de données de décharge et d'un ou plusieurs objet(s) d'état ; et

une étape de détection d'un ou plusieurs dispositif(s) périphérique(s) différent(s) qui est/sont conçu(s) pour gérer la commande de traitement de la ou des liaison(s) par la réception de la ou des structure(s) de données de décharge et de la commande du ou des objet(s) d'état.

**51.** Produit-programme informatique conformément à la revendication 50, dans lequel les instructions exécutables par ordinateur, lorsqu'elles sont exécutées par le ou les processeur(s), amènent en outre le système informatisé à exécuter :

une étape de détection (930) d'une ressource de traitement du ou des dispositif(s) périphérique(s) différent(s) ;

si l'un desdits objets d'état déchargés peut être traité par le ou les dispositif(s) périphérique(s) différent(s) sur la base de la ressource de traitement détectée, le transfert (940) de la commande de traitement du ou des objet (s) d'état déchargé(s) audit dispositif périphérique différent ; et

si le ou les objet(s) d'état déchargé(s) ne peut/peuvent pas être traité(s) par le ou les dispositif(s) périphérique (s) différent(s) sur la base de la ressource de traitement détectée, le transfert de la commande de traitement du ou des objet(s) d'état déchargé(s) à la pile de protocoles hôte.

100 — APPLICATION

108 — SWITCH

102 {
106
INTERMEDIATE LAYER
110

104 — PERIPHERAL DEVICE

## FIG. 1

200 — APPLICATION

206 — TLI SWITCH

201 — TRANSPORT LAYER ← TCB

202 — NETWORK LAYER ← RCE

230

220

203 — FRAMING LAYER

210 — NDIS MINIDRIVER | 212 CHIMNEY DRIVER

270

214 — HARDWARE

## FIG. 2

FIG. 3

FIG. 4A

FIG. 4B

FIG. 4C

FIG. 4D

FIG. 5A

FIG. 5B

TCP
650

NETWORK
LAYER
(PATH)
660

FRAMING
LAYER
(NEIGHBOR)
670

NDIS
680

MINIPORT
690

**FIG. 6**

OFFLOAD RETRIEVE INDICATION
704
702

TERMINATE OFFLOAD REQUEST
728
726
724
722

COMPLETE OUTSTANDING REQUESTS
734
732

TERMINATE OFFLOAD COMPLETION
744
742
746
748

TCP
750

NETWORK
LAYER
(PATH)
760

FRAMING
LAYER
(NEIGHBOR)
772

NDIS
780

MINIPORT
790

**FIG. 7**

REDUCING THE PROCESSING DEMANDS OF A COMPUTERIZED SYSTEM
THAT IS PROCESSING TWO OR MORE NETWORK LINKS BY
TRANSFERRING PROCESSING CONTROL OF THE TWO OR MORE
NETWORK LINKS AT ONCE

```
┌──────────────────────────────────────────────┐
│              GENERATE A BLOCK LIST            │── 810
└──────────────────────────────────────────────┘
```

── 800

```
┌──────────────────────────────────────────────┐
│     TRANSFER THE BLOCK LIST AND CONTROL OF A  │── 830
│  PORTION OF THE STATE OBJECT TO A DESTINATION │
│                  COMPONENT                    │
└──────────────────────────────────────────────┘
```

```
┌──────────────────────────────────────────────┐
│        PROCESS THE TWO OR MORE LINKS BY       │── 840
│            THE DESTINATION COMPONENT          │
└──────────────────────────────────────────────┘
```

FIG. 8

DYNAMICALLY PRESERVING THE INTEGRITY OF THE TWO OR MORE NETWORK LINKS IN THE EVENT OF A DESTINATION COMPONENT FAILOVER —900

DETECT THAT AN ONE OR MORE INITIAL PERIPHERAL DEVICES HAS FAILED —910

RETURN PROCESSING CONTROL TO A CENTRAL PROCESSING UNIT —920

DETECT A PROCESSING RESOURCE OF ONE OR MORE ALTERNATE PERIPHERAL DEVICES —930

TRANSFER PROCESSING CONTROL TO THE ONE OR MORE ALTERNATE PERIPHERAL DEVICES —940

FIG. 9

DETECT TWO OR MORE CACHED STATE DATA STRUCTURES —1000

ORGANIZE THE TWO OR MORE CACHED STATES INTO A CHIMNEY STACK —1010

CREATE AN OFFLOAD DATA STRUCTURE THAT INCLUDES THE CHIMNEY STACK —1020

INSERT ONE OR MORE INTERMEDIATE DRIVERS WITHIN THE OFFLOAD DATA STRUCTURE —1030

FIG. 10

FIG. 11

EP 1 515 511 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6141705 A
- US 6370599 B
- US 726082 A

- US 20030158906 A1
- EP 1359724 A

**Non-patent literature cited in the description**

- **Wang, Y. ; Kunz, T.** A dynamic assignment problem in a mobile communication system with limited bandwidth. *A dynamic assignment problem in a mobile communication system with limited bandwidth,* 06 January 2003, 293-302